# EUROPÄISCHE PATENTSCHRIFT

(11) **EP 3 330 660 B1**
(45) Veröffentlichungstag und Bekanntmachung des Hinweises auf die Patenterteilung: **24.04.2019**
(21) Anmeldenummer: 17020027.3
(22) Anmeldetag: 25.01.2017
(51) Int. Cl.: F28F 25/08, B24C 1/00, F28G 1/00, F28G 1/12, F28G 1/16, F28C 1/00

(54) **VORRICHTUNG, VERWENDUNG UND VERFAHREN ZUR REINIGUNG VON KÜHLTURMEINBAUTEN**
METHOD, USE AND DEVICE FOR CLEANING COOLING TOWER INSERTS
DISPOSITIF, UTILISATION ET PROCÉDÉ DE NETTOYAGE D'INSTALLATIONS DE TOUR DE REFROIDISSEMENT

(30) Priorität: 30.11.2016 EP 16020475
(43) Veröffentlichungstag der Anmeldung: 06.06.2018
(73) Patentinhaber: AIC GmbH, 46414 Rhede (DE)
(72) Erfinder: THIELKES, Sebastian, 46414 Rhede (DE)
(74) Vertreter: Von Rohr Patentanwälte Partnerschaft mbB

(56) Entgegenhaltungen:
- WO-A1-2010/133784
- WO-A1-2011/042187
- WO-A1-2013/076395
- DE-A1-102016 212 602
- GB-A- 2 520 229
- US-A1- 2005 160 552

## Beschreibung

Die vorliegende Erfindung betrifft grundsätzlich das technische Feld der Reinigung von Kühlturmeinbauten. WO 2011/042187 offenbart eine derartige Reinigungsvorrichtung.

Insbesondere betrifft die vorliegende Erfindung eine Reinigungsvorrichtung zur Reinigung von Kühlturmeinbauten, ein Reinigungssystem, eine Verwendung sowie ein Verfahren zur Reinigung von Kühlturmeinbauten.

Als Kühlturm werden Anlagen zur Kühlung eines Primärmediums, zumeist Wasser, unter der Verwendung eines Kühlmediums, zumeist Luft, verstanden. Unterschieden wird zwischen einer Trockenkühlung, bei der das Primärmedium keinen direkten Kontakt mit dem Kühlmedium (Luft) hat und der sogenannten Nasskühlung, bei der durch den Kontakt des Primärmediums (Wasser) mit dem Kühlmedium (Luft) der Effekt der Verdunstungskühlung benutzt wird. Die vorliegende Erfindung betrifft primär die Nasskühlung bzw. die Reinigung von Kühlturmeinbauten zum Einsatz bei oder verunreinigt durch Einsatz in einem Kühlturm nach dem Nasskühlungs-Prinzip. Grundsätzlich ist eine Anwendung im Zusammenhang mit der Trockenkühlung oder mit Hybrid-Systemen, die die Trockenkühlung und die Nasskühlung kombinieren, jedoch nicht ausgeschlossen.

Weiter wird grundsätzlich zwischen Gegenstromkühltürmen und Kreuzstromkühltürmen unterschieden, wobei in Gegenstromkühltürmen das Primärmedium (Wasser) und das Kühlmedium (Luft) in entgegengesetzte Richtungen strömen, wobei zumeist die Luft in Gebrauchslage nach oben strömt, während das Wasser nach unten läuft. Die vorliegende Erfindung ist besonders vorteilhaft bei derartigen Gegenstromkühltürmen bzw. bei der Reinigung von Kühlturmeinbauten solcher Systeme.

Die Alternative sind sogenannte Kreuzstromkühltürme, bei denen das Primärmedium und das Kühlmedium quer zueinander strömen. Insbesondere ist vorgesehen, dass das Primärmedium (Wasser) von oben nach unten läuft und das Kühlmedium (Luft) quer oder senkrecht hierzu strömt, in Gebrauchslage bevorzugt von einer Seite zu einer gegenüberliegenden Seite in zumindest im Wesentlichen horizontaler Richtung. Auch wenn die vorliegende Erfindung primär anhand von Gegenstromkühltürmen erläutert wird und in diesem Zusammenhang auch besonders vorteilhaft wirkt, ist eine Anwendung im Zusammenhang mit der Reinigung von Kühlturmeinbauten von Kreuzstromkühltürmen nicht grundsätzlich ausgeschlossen.

Insbesondere betrifft die vorliegende Erfindung die Reinigung von Kühlturmeinbauten sogenannter Naturzug-Kühltürme, bei denen die in den Kühlturm durch das Primärmedium (Wasser) eingetragene Wärmeenergie verwendet wird, um das Kühlmedium (Luft) über den Kamineffekt zu fördern. Hierbei wird ausgenutzt, dass warme Luft eine geringere Dichte als kalte Luft aufweist und folglich innerhalb des Naturzug-Kühlturms nach oben steigt und den Kühlturm an einer oben liegenden Öffnung verlässt, während auf einer Unterseite, zumeist seitlich, Umgebungsluft in den Kühlturm nachströmt.

Im Folgenden wird die vorliegende Erfindung stets anhand solcher Naturzug Kühltürme nach dem Nasskühlungsprinziperläutert, im Folgenden der Einfachheit halber stets "Kühlturm" genannt, ohne dass die Erfindung grundsätzlich hierauf beschränkt ist.

Zur Kühlung wird das Primärmedium - Warmwasser - üblicherweise über Spritz-Aggregate wie Sprühdüsen in den Innenraum bzw. Prozessraum des Kühlturms eingesprüht. Zur Effizienzsteigerung weisen Kühltürme Kühleinbauten auf, die die Kühlleistung verbessern und den Wasserverlust verringern.

"Kühlturmeinbauten" im Sinne der vorliegenden Erfindung sind insbesondere sogenannte Füllkörper, auch Kühlpakete genannt. Hierbei handelt es sich um Strukturen, die beispielsweise durch einen waben-, röhren- oder gitterartigen Aufbau dazu ausgebildet sind, verregnetes bzw. versprühtes Primärmedium (Warmwasser) auf einer großen Oberfläche zu verteilen, damit für eine effektive und effiziente Kühlung eine große Wasseroberfläche erzeugt wird.

Bekannte Fühlkörper werden entweder durch eine Gitterkonstruktion oder durch eine Aneinanderreihung von Folien zur Erzeugung von Strömungskanälen gebildet. Hier gibt es jedoch auch andere Lösungsansätze.

Die Füllkörper sind im Kühlturm in Einbaulage unterhalb der Sprühdüsen angeordnet und werden folglich bei Beschickung der Sprühdüsen mit Warmwasser beregnet und auf diese Weise mit Warmwasser benetzt, wobei das Warmwasser aufgrund der Schwerkraft nach unten entlang der Strukturen der Füllkörper fließt.

Das Kühlmedium (Luft) strömt in entgegengesetzte Richtung oder quer zur Flussrichtung des Warmwassers durch die Füllkörper, wird hierbei aufgewärmt und steigt durch den Kamineffekt im Inneren des Kühlturms nach oben und entweicht auf der Oberseite. Um hierbei mitgerissene Tropfen abzufangen, sind in Gebrauchslage oberhalb der Sprühdüsen sogenannte Tropfenabscheider vorgesehen, die zumeist durch Strömungsumlenkung dazu ausgebildet sind, einen Niederschlag von mitgerissenen Tropfen herbeizuführen. Diese Tropfenabscheider zählen im Sinne der vorliegenden Erfindung wie auch die Füllkörper zu den Kühlturmeinbauten.

Es hat sich gezeigt, dass die Kühlturmeinbauten über die Nutzungsdauer kontaminiert werden durch Kalkablagerungen, Algenwachstum u. dgl. Solche Kontaminationen, insbesondere in Form von Belägen auf den Kühlturmeinbauten, reduzieren mit zunehmendem Grad der Kontamination die Leistungsfähigkeit des Kühlturms hinsichtlich der Kühlleistung.

Vor diesem Hintergrund ist es im Stand der Technik bekannt, Kühlturmeinbauten in gewissen Abständen zu demontieren und entweder auszutauschen oder außerhalb des Kühlturms zu reinigen. Eine Reinigung im Kühlturm ist vielfach aufgrund der potentiellen Kontamination des Kühlwassers unerwünscht. Die zu reinigenden Kühlturmeinbauten sind zudem regelmäßig in einer Höhe zwischen 5 und 25 m angeordnet, was eine Reinigung in der Gebrauchslage erschwert, weshalb üblicherweise die Demontage der Kühlturmeinbauten trotz der hiermit verbundenen Kosten und Ausfallzeiten in Kauf genommen wird.

Die US 9, 146,063 B2 zeigt in diesem Zusammenhang einen Ansatz zur Reinigung von Füllkörpern von Luft-Wasser-Wärmetauschern, bei denen sogenannte Nadeln in Füllkörper eingeschoben werden. Hierbei werden die Nadeln in Schwingung versetzt, um durch die induzierten Vibrationen Kalk und sonstige Kontaminationen mechanisch zu entfernen. Mechanische Lösungen haben jedoch den Nachteil, dass Beschädigungen an der Konstruktion der Füllkörper nicht ausgeschlossen sind, durch die Nadeln nur begrenzte Abschnitte von Füllkörper-Oberflächen erreicht werden und die Reinigungsleistung daher hinter anderen Verfahren zurückbleibt.

Eine Aufgabe der vorliegenden Erfindung liegt darin, eine Reinigungsvorrichtung zur Reinigung von Kühlturmeinbauten, ein Reinigungssystem, eine Verwendung sowie ein Verfahren zur Reinigung von Kühlturmeinbauten anzugeben, wodurch eine möglichst effiziente und effektive Reinigung der Kühlturmeinbauten ermöglicht wird.

Diese Aufgabe wird durch eine Reinigungsvorrichtung gemäß Anspruch 1, durch ein Reinigungssystem gemäß Anspruch 13, durch eine Verwendung gemäß Anspruch 14 oder durch ein Verfahren gemäß Anspruch 15 gelöst. Vorteilhafte Weiterbildungen sind Gegenstand der Unteransprüche.

Ein erster Aspekt der vorliegenden Erfindung betrifft eine Reinigungsvorrichtung zur Reinigung von Kühlturmeinbauten, wobei die Reinigungsvorrichtung eine Trockeneisstrahlvorrichtung aufweist, die eine oder mehrere Strahleinrichtungen zur Abgabe von Strahlgut aufweisen.

Beim Trockeneis-Strahlen wird Strahlgut in Form von Trockeneis-Pellets beschleunigt, insbesondere mittels Druckluft, um diese mit hoher Geschwindigkeit gegen Oberflächen zu schleudern, um diese Oberflächen zu bearbeiten oder zu reinigen.

Eine Trockeneisstrahlvorrichtung im Sinne der vorliegenden Erfindung ist vor diesem Hintergrund eine Anlage, die ein beschleunigtes oder beschleunigungsfähiges Gemisch von Gas, insbesondere Druckluft, und Trockeneis-Pellets zur Verfügung stellt.

Strahleinrichtungen zur Abgabe von Strahlgut im Sinne der vorliegenden Erfindung sind vorzugsweise Düsen oder düsenartige Konstruktionen oder sonstige Gebilde mit geeigneten Öffnungen oder Düsen zur Abgabe des beschleunigten Trockeneis-Gas-Gemischs.

Die Strahleinrichtungen der vorliegenden Erfindung sind vorzugsweise in die Kühlturmeinbauten einschiebbar und/oder entlang der Kühlturmeinbauten bewegbar. Hierzu können die Strahleinrichtungen länglich bzw. lanzenartig mit endseitigen Abgabeöffnungen ausgebildet sein, worauf später genauer eingegangen wird.

Ferner ist vorgesehen, dass die vorschlagsgemäße Reinigungsvorrichtung eine Absaugung aufweist, die dazu ausgebildet ist, durch das Strahlgut (Trockeneis) gelöstes Material (Kalk und sonstige Kontaminationen) aus den Kühlturmeinbauten abzusaugen.

Unter Trockeneis wird Kohlendioxid (CO₂) in festen Aggregatzustand verstanden, das bei Normaldruck bei Erwärmung sublimiert, also direkt in die Gasphase übergeht. Dies hat sich als vorteilhaft erwiesen, da eine Kontamination des Kühlwassers durch Reinigungsflüssigkeiten sicher vermieden werden kann. Zudem hat sich Trockeneisstrahlen als sowohl das Material der Kühlturmeinbauten schonendes Verfahren als auch als Verfahren mit guter Reinigungswirksamkeit gezeigt. Die Trockeneis-Pellets werden hierbei auf die kontaminierten Oberflächen der Kühlturmeinbauten geschleudert und sprengen hierdurch die Ablagerungen wie Kalk ab, ohne jedoch die Konstruktion der Kühlturmeinbauten selbst zu beeinträchtigen. Ein ebenfalls durch den Einsatz von Trockeneis erreichter Vorteil ist, dass Trockeneis mit seiner Temperatur unter Normaldruck von höchstens -78° (194 K) die Kontaminationen gefrieren lässt und somit versprödet, was die Reinigungsleistung positiv beeinflusst.

Dadurch, dass die mittels Trockeneisstrahlen abgetragenen oder abtragbaren Kontaminationen von den Kühlturmeinbauten im Ergebnis pulver- bzw. staubförmig vorliegen, können diese gut abgesaugt werden. Hierbei kommt der Erfindung zusätzlich zu Gute, dass durch das Trockeneisstrahlen abgesprengte Partikel der Kontamination bereits aufgewirbelt sind und infolge dessen effektiv und mit zumutbarem Aufwand abgesaugt werden können.

Im Ergebnis ermöglicht die Kombination der Trockeneisreinigung mit gleichzeitiger Absaugung eine besonders effektive und gründliche Reinigung bei gleichzeitig einfacher Entsorgung abgetragener Kontaminationen und Verhinderung der Verunreinigung von Kühlwasser dadurch, dass die abgetragenen Kontaminationen abgefangen werden und folglich mit dem Kühlwasser nicht in Kontakt kommen und zudem keine flüssigen Reinigungssubstanzen eingesetzt werden.

Ein weiterer, auch unabhängig realisierbarer Aspekt der vorliegenden Erfindung betrifft ein Reinigungssystem mit einer Verfahreinrichtung, die einen Teleskoparm aufweist, insbesondere ein sogenannter Teleskoplader oder Teleskopstapler, an dem als Anbaugerät die vorschlagsgemäße Reinigungsvorrichtung befestigt ist, wodurch das Reinigungssystem dazu ausgebildet ist, die Reinigungsvorrichtung von unten an die Kühlturmeinbauten zu bewegen.

Wie bereits zuvor erläutert, sind die Kühlturmeinbauten in mehreren Metern Höhe im Kühlturm montiert. Eine Demontage zur Reinigung oder der Austausch sind kostenintensiv und mit erheblichen Ausfallzeiten für die Nutzung des Kühlturms verbunden. Das vorschlagsgemäße Reinigungssystem ermöglicht es in diesem Zusammenhang, den Ausbau oder Austausch der Kühlturmeinbauten zu vermeiden. Stattdessen ermöglicht der Teleskoparm das Heranführen der vorschlagsgemäßen Reinigungsvorrichtung auch an mehrere Meter hoch montierte Kühlturmeinbauten. Die Verfahreinrichtung ermöglicht weiter eine sukzessive Reinigung aller Kühlturmeinbauten durch mehrfache Repositionierung der Reinigungsvorrichtung durch Verfahren des Reinigungssystems.

Folglich ermöglicht das vorschlagsgemäße Reinigungssystem in vorteilhafter Weise die Trockeneis-Reinigung der Kühlturmeinbauten in ihrer Einbaulage, ohne dass diese ausgetauscht oder demontiert werden müssen. Dies ermöglicht die Verringerung von Ausfallzeiten sowie eine Vermeidung des Austauschs der Kühlturmeinbauten, was im Ergebnis eine ressourcenschonende Wiederverwendung der vorhandenen Kühlturmeinbauten bei gleichzeitig wesentlicher Effizienzsteigerung durch Entfernen der Kontaminationen ermöglicht.

Ein weiterer, auch unabhängig realiserbarer Aspekt der vorliegenden Erfindung betrifft die Verwendung der vorschlagsgemäßen Reinigungsvorrichtung oder des vorschlagsgemäßen Reinigungssystems zur Reinigung in ihrer Gebrauchslage in einem Kühlturm eingebauten Kühlturmeinbauten. Wie bereits zuvor erläutert, ist die Anwendung der vorschlagsgemäßen Reinigungsvorrichtung sowie des vorschlagsgemäßen Reinigungssystems bei Kühltürmen, insbesondere Naturzugkühltürmen, besonders vorteilhaft. Grundsätzlich ist eine Anwendung in anderen Bereichen, insbesondere bei anderen Kühltürmen oder Kühlturmeinbauten, jedoch nicht ausgeschlossen.

Ein weiterer, auch unabhängig realisierbarer Aspekt der vorliegenden Erfindung betrifft ein Verfahren zur Reinigung von in ihrer Gebrauchslage befindlichen Kühlturmeinbauten mit einer Reinigungsvorrichtung, die eine Trockeneisstrahlvorrichtung aufweist, wobei die Trockeneisstrahlvorrichtung wiederum eine oder mehrere Strahleinrichtungen zur Abgabe von Strahlgut (Trockeneis-Pellets) aufweist, die in die Kühlturmeinbauten eingeschoben und/oder entlang der Kühlturmeinbauten bewegt werden. Zudem ist vorgesehen, dass die Reinigungsvorrichtung eine Absaugung aufweist, mit der durch das Strahlgut gelöstes Material aus den Kühlturmeinbauten abgesaugt wird.

Das vorschlagsgemäße Verfahren bietet zunächst die bereits im Zusammenhang mit der Reinigungsvorrichtung erläuterten Vorteile der Trockeneisreinigung von Kühlturmeinbauten in Kombination mit der Absaugung von gelöstem Material (Kontaminationen wie Kalk). Weitere Vorteile ergeben sich durch das Einschieben der Strahleinrichtungen bzw. das Bewegen der Strahleinrichtungen entlang der Kühlturmeinbauten. Hierdurch wird der jeweils mit dem Strahlverfahren beaufschlagte Abschnitt der Kühlturmeinbauten variiert, was die Reinigungsleistung positiv beeinflusst.

Besonders bevorzugt werden die Strahleinrichtungen sowohl entlang der Kühlturmeinbauten als auch in die Kühlturmeinbauten bzw. durch die Kühlturmeinbauten bewegt, wodurch die Kühlturmeinbauten nicht nur oberflächlich, also im Bereich der Grenzflächen zum freien Prozessraum des Kühlturms, sondern auch innen gereinigt werden können. Die Reinigung der Kühlturmeinbauten von innen heraus durch Einschieben der Strahleinrichtungen in die Kühlturmeinbauten hat sich bezüglich der Reinigungsleistung als besonders vorteilhaft erwiesen.

Die zuvor beschriebenen und im Folgenden anhand eines Ausführungsbeispiels bezugnehmend auf die Zeichnung erläuterten Aspekte können grundsätzlich getrennt voneinander oder in unterschiedlichen Kombinationen realisiert werden und vorteilhaft sein.

Weitere Aspekte und Vorteile ergeben sich aus den Ansprüchen und aus der nachfolgenden Beschreibung eines bevorzugten Ausführungsbeispiels anhand der Zeichnung. Es zeigt:
- Fig. 1: einen schematischen Schnitt durch einen Kühlturm;
- Fig. 2: eine schematische, teilweise geschnittene Ansicht eines vorschlagsgemäßen Reinigungssystems;
- Fig. 3: eine schematische, teilweise geschnittene Ansicht einer vorschlagsgemäßen Reinigungsvorrichtung;
- Fig. 4: einen Reinigungskopf einer vorschlagsgemäßen Reinigungsvorrichtung;
- Fig. 5: einen schematischen Schnitt des Reinigungskopfs gemäß der Schnittlinie IV - IV aus Fig. 4;
- Fig. 6: einen schematischen Schnitt teilweise in einen Kühlturmeinbau eingeschobenen Strahleinrichtungen;
- Fig. 7: einen weiteren schematischen Schnitt teilweise in einen Kühlkerneinbau eingeschobener Strahleinrichtungen; und
- Fig. 8: einen Teil einer vorschlagsgemäßen Sprüheinrichtung 6.

In den Figuren werden dieselben Bezugszeichen für gleiche oder ähnliche Teile verwendet, wobei dieselben oder entsprechende Vorteile und Eigenschaften erreicht werden können, auch wenn von einer wiederholten Beschreibung abgesehen wird.

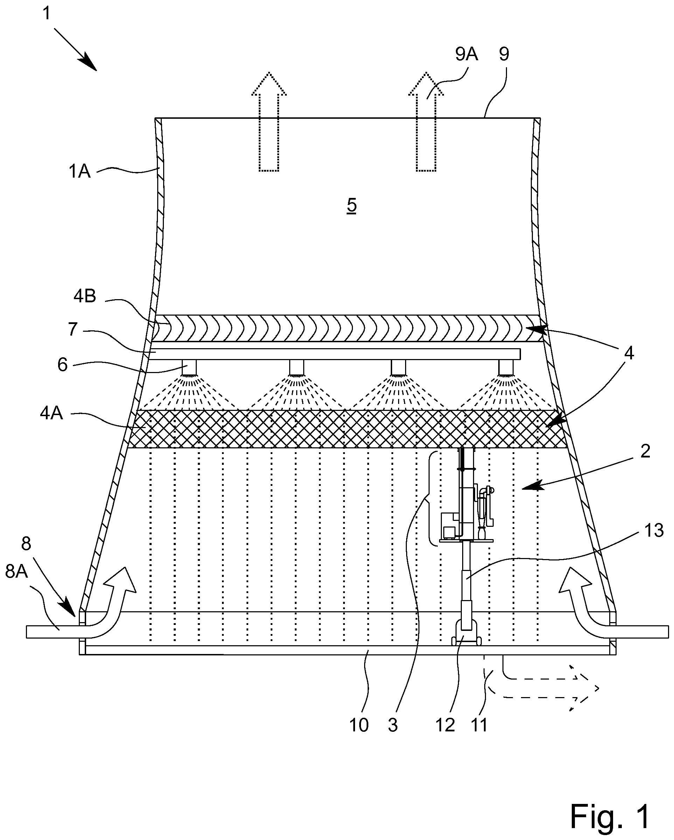

Fig. 1 zeigt einen schematischen Schnitt eines Kühlturms 1 mit einem vorschlagsgemäßen Reinigungssystem 2 aufweisend eine Reinigungsvorrichtung 3 zur Reinigung von Kühlturmeinbauten 4, insbesondere Füllkörpern 4A und/oder Tropfenabscheidern 4B. Die Kühlturmeinbauten 4 sind vorzugsweise in mehreren Metern Höhe im Prozessraum 5 des Kühlturms 1 montiert.

Der Kühlturm 1 weist im Prozessraum 5 Sprüheinrichtungen 6 zur Versprühung bzw. Verteilung von Warmwasser (vorliegend das Primärmedium) auf oder über den Kühlturmeinbauten 4, insbesondere Füllkörpern 4A, auf. Die Sprüheinrichtungen 6 werden zu diesem Zweck vorzugsweise im Betrieb des Kühlturms 1 mit Warmwasser mittels eines Warmwasserzulaufs 7 beschickt. Das Warmwasser wird durch die Sprüheinrichtungen 6 verregnet bzw. vernebelt, vorzugsweise in Richtung der Kühlturmeinbauten 4 bzw. Füllkörpern 4A. Infolge dessen werden im Normalbetrieb des Kühlturms 1 die Kühlturmeinbauten 4 mit dem Warmwasser benetzt.

Der Kühlturm 1 weist darüber hinaus mindestens eine Lufteintrittsöffnung 8 auf, die in Gebrauchslage unten und/oder seitlich am Kühlturm 1, beispielsweise durch eine oder mehrere Durchbrechungen einer den Kühlturm 1 bildenden Kühlturm-Außenwand 1A gebildet sein kann. Durch die Lufteintrittsöffnung 8 einströmende (Umgebungs-) Luft 8A (vorliegend das Kühlmedium) kann durch das mittels der Sprüheinrichtungen 6 in den Prozessraum 5 einsprühbare Warmwasser erwärmt werden und infolge dessen durch den Kamineffekt aufsteigen und den Kühlturm 1 durch eine in Gebrauchslage nach oben offene bzw. am oberen Rand des Kühlturms 1 gebildete Luftaustrittsöffnung 9 als Abluft 9A verlassen. Im Normalbetrieb des Kühlturms 1 strömt also Umgebungsluft 8A durch die Lufteintrittsöffnung 8 fußseitig in den Kühlturm 1 ein und verlässt diesen als Abluft 9A durch die Luftaustrittsöffnung 9.

Das Kühlmedium Luft strömt im Darstellungsbeispiel der Schwerkraft entgegengesetzt von unten nach oben, während das Warmwasser grundsätzlich der Schwerkraft folgend im Gegenstrom von oben nach unten strömt. Die Luftströmung reißt hierbei insbesondere kleine, durch die Sprüheinrichtungen 6 erzeugte Wassertröpfchen mit nach oben, die durch die Kühlturmeinbauten 4, hier in Form von Tropfenabscheidern 4B, abgefangen werden. Die Tropfenabscheider 4B sind in diesem Zusammenhang durch Stromumlenkungsmittel dazu ausgebildet, einen Niederschlag von mitgerissenen Tropfen zu bewirken, die im Anschluss von den Tropfenabscheidern 4B auf die Füllkörper 4A fallen können.

Warmwasser, das die Füllkörper 4A passiert hat und dort abgekühlt worden ist, tropft im Anschluss in eine Wasserauffangeinrichtung 10 und kann durch einen Kühlwasserablauf 11 dem Kühlturm 1 entnommen werden.

Das Primärmedium, vorliegend also Warmwasser, hinterlässt auf die Dauer in den Kühlturmeinbauten 4, insbesondere in den Füllkörpern 4A, Kalk, weitere mineralische Rückstände und/oder sonstige Rückstände. Ferner wachsen in den Kühlturmeinbauten 4 bzw. auf deren Oberflächen teils Algen, Pilze und dergleichen, was durch die feucht-warme Umgebung, in der die Kühlturmeinbauten 4 betrieben werden, gefördert wird. Diese, insgesamt als Kontaminationen bezeichneten Ablagerungen verstopfen auf Dauer die Kühlturmeinbauten 4 oder reduzieren jedenfalls den für einen Luftstrom verfügbaren Querschnitt der Kühlturmeinbauten 4, was die Kühlleistung bzw. Effizienz des Kühlturms 1 beeinträchtigt. Eine solche Effizienzreduktion zu vermeiden, einer Effizienzreduktion vorzubeugen oder eine Effizienz wieder herzustellen hat sich die vorliegende Erfindung zur Aufgabe gemacht.

Die vorliegende Erfindung betrifft in diesem Zusammenhang die Reinigung der Kühlturmeinbauten 4, insbesondere der Füllkörper 4A und/oder der Tropfenabscheider 4B. Grundsätzlich können jedoch auch andere Einbauten des Kühlturms 1 wie die Sprüheinrichtungen 6 o. dgl. gereinigt werden.

In Fig. 1 ist das vorschlagsgemäße Reinigungssystem 2 mit der vorschlagsgemäßen Reinigungsvorrichtung 3 in seiner Gebrauchslage schematisch eingezeichnet. Das Reinigungssystem 2 weist vorzugsweise eine Verfahreinrichtung 12 auf, die es beispielsweise mittels Rädern, einem Motor o. dgl. ermöglicht, das Reinigungssystem 2 innerhalb des Prozessraums oder allgemein auf einem Untergrund zu bewegen.

Ferner weist das vorschlagsgemäße Reinigungssystem 2 vorzugsweise einen Teleskoparm 13 auf, der dazu ausgebildet ist, die Reinigungsvorrichtung 3 in Gebrauchslage vertikal zu bewegen und/oder an die Kühlturmeinbauten 4, die sich in der Gebrauchslage befinden, anzunähern. Der Teleskoparm 13 verbindet hierbei vorzugsweise die Verfahreinrichtung 12 mit der Reinigungsvorrichtung 3. Die Reinigungsvorrichtung 3 ist besonders bevorzugt an einem der Verfahreinrichtung 12 abgewandten Ende des Telekoparms 13 befestigt. Die Befestigung kann abnehmbar erfolgen, beispielsweise durch grundsätzlich im Stand der Technik bekannte Schnellwechsel-Systeme, die beispielsweise mit zueinander korrespondierenden oder komplementären Haken und Traversen arbeiten. Dies ermöglicht es in vorteilhafter Weise, die Reinigungsvorrichtung 3 bedarfsweise mit unterschiedlichen Unterbauten (Verfahreinrichtungen 12 mit Teleskoparm 13) zu betreiben bzw. letztere auch getrennt von der Reinigungsvorrichtung 3 zu nutzen.

Dadurch, dass die Reinigungsvorrichtung 3 abnehmbar ist, ergibt sich besonders bevorzugt ein modulares Reinigungssystem 2, bei dem zur Beförderung der Reinigungsvorrichtung 3 in Abhängigkeit von den Begebenheiten des jeweiligen Kühlturms 1, insbesondere der Position der Kühlturmeinbauten 4, jeweils geeignete Verfahreinrichtungen 12, Teleskoparme 13 oder hierdurch gebildete Unterbauten gewählt werden können.

Besonders bevorzugt sind die Verfahreinrichtung 12 und der Teleskoparm 13 durch einen sogenannten Teleskoplader bzw. Telekopstapler realisiert. Unter "Teleskoplader" ist eine Baumaschine zu verstehen, die am offenen Ende eines Teleskoparms 13 die Reinigungsvorrichtung 3 tragen kann und im Übrigen durch ein Kraftfahrzeug realisiert ist, das den Teleskoparm 13 aufweist und verfahren kann. Hier sind grundsätzlich jedoch auch andere Lösungen, insbesondere auch der Einsatz anderer Stapler-Typen denkbar.

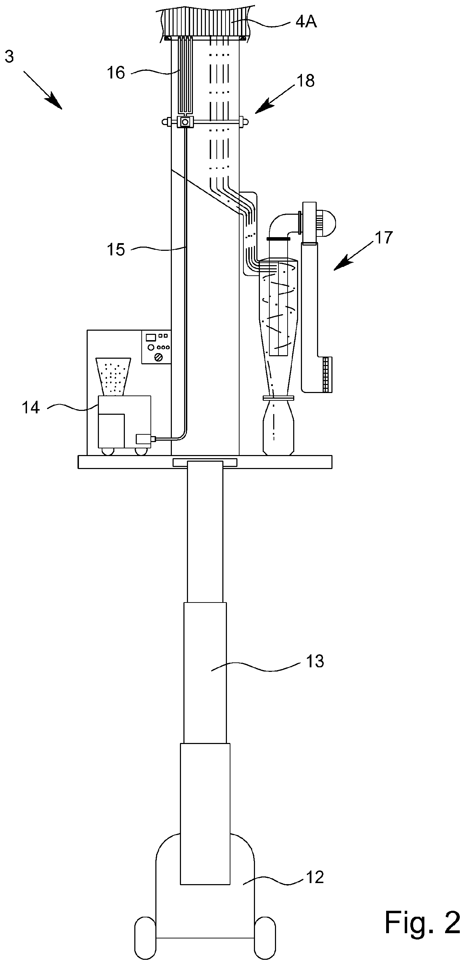

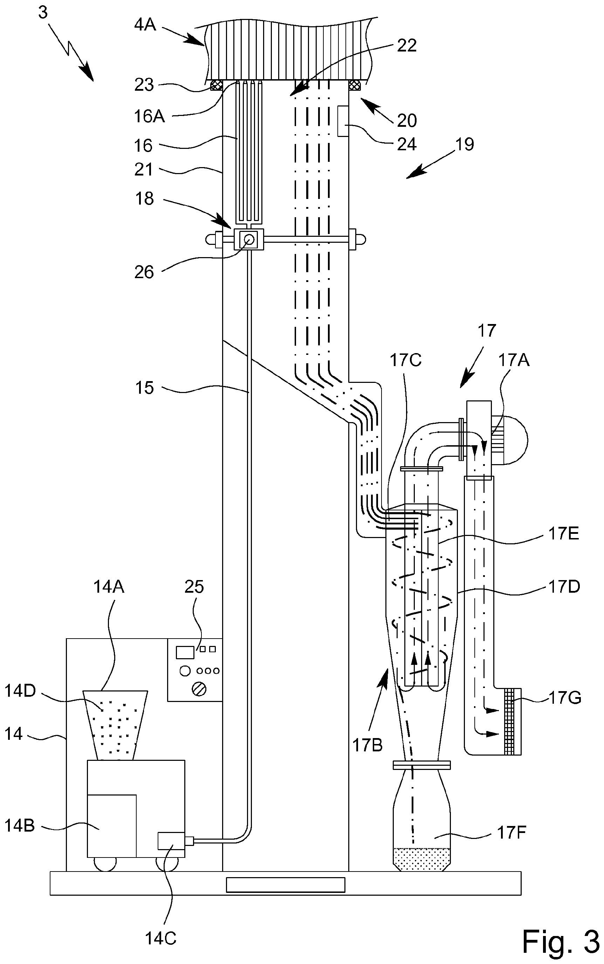

Fig. 2 zeigt das vorschlagsgemäße Reinigungssystem 2 in einer schematischen, teilgeschnittenen Ansicht, während Fig. 3 als Ausschnitt hiervon die vorschlagsgemäße Reinigungsvorrichtung 3 in einem vergrößerten, schematischen Schnitt zeigt.

Die Reinigungsvorrichtung 3 weist vorzugsweise eine Trockeneisstrahlvorrichtung 14 auf. Diese kann einen Trockeneisvorrat 14A bzw. -behälter und/oder Förderer zur Aufnahme und/oder Förderung von Trockeneis bzw. Trockeneis-Pellets als Strahlgut 14D, einen Kompressor oder sonstigen Druckluft oder Druck-Gaserzeuger oder -speicher, im Folgenden Druckgassystem 14B genannt und/oder einen Mischer 14C aufweisen. Der Mischer 14C ist hierbei vorzugsweise dazu ausgebildet, Trockeneis-Granulat bzw. Trockeneis-Pellets 14D aus dem Trockeneisvorrat 14A mit Druckgas, insbesondere Druckluft, von dem Druckgassystem 14B zu mischen und abzugeben. Der Mischer 14C kann hierbei eine Venturi-Düse aufweisen oder hierdurch gebildet sein. Grundsätzlich sind hier jedoch auch andere Lösungen denkbar.

Die Trockeneisstrahlvorrichtung 14 ist vorzugsweise mittels einer Leitung 15 mit einer oder mehreren Strahleinrichtungen 16 verbunden. Das durch den Mischer 14C erzeugte Strahlgut-Gas-Gemisch kann unter Überdruck bzw. Hochdruck stehen und auf diese Weise durch die Leitung 15 in die ein oder mehreren Strahleinrichtungen 16 gedrückt werden.

Die Trockeneisstrahlvorrichtung 14 ist vorzugsweise dazu ausgebildet, ein Strahlgut-Gas-Gemisch-Volumen von mehr als 40 m³/h, insbesondere mehr als 60 m³/h abzugeben. Die Trockeneisstrahlvorrichtung 14 ist vorzugsweise dazu ausgebildet, pro Strahleinrichtung 16 mehr als 40 kg Trockeneis pro Stunde, vorzugsweise mehr als 50 kg Trockeneis pro Stunde, insbesondere ungefähr 60 kg Trockeneis pro Stunde abzugeben.

Das Druckgassystem 14B ist vorzugsweise dazu ausgebildet, einen Druck bzw. Strahldruck am Ausgang bzw. den Strahldüsen 16A der Strahleinrichtungen 16 von mehr als 8 bar, vorzugsweise mehr als 10 bar, insbesondere mehr als 12 bar und/oder weniger als 20 bar, vorzugsweise weniger als 18 oder 15 bar zu erzeugen oder bereitzustellen. Alternativ oder zusätzlich ist das Druckersystem 14B vorzugsweise dazu ausgebildet, ein Luftvolumen von mehr als 5 m³ pro Minute, insbesondere mehr als 8 m³ pro Minute und/oder weniger als 40 m³ pro Minute, insbesondere weniger als 30 m³ pro Minute bereitzustellen.

Die Strahleinrichtungen 16 sind vorzugsweise dazu ausgebildet, das Strahlgut, also Trockeneis-Pellets, insbesondere endseitig bzw. an einem offenen Ende bzw. an einer oder mehreren Strahldüsen 16A der Strahleinrichtung 16 abzugeben. Die Strahleinrichtungen 16 bzw. Strahldüsen 16A können hierbei dazu ausgebildet sein, Strahlgut ausschließlich oder auch seitlich bzw. in eine Richtung, die von einer Mittelachse der jeweiligen Strahleinrichtung 16 abweicht, beispielsweise um mehr als 20° oder 30°, abzugeben. Auf diese Weise ist es möglich, mittels der Strahleinrichtungen 16 Kühlturmeinbauten 4 vollständig und auch zwischen den einzelnen Strahleinrichtungen 16 zu reinigen. Hier sind jedoch grundsätzlich auch andere Vorgehensweisen und Düsenkonfigurationen denkbar.

Die Strahleinrichtungen 16 sind vorzugsweise in die Kühlturmeinbauten 4, insbesondere die Füllkörper 4A, einschiebbar. Alternativ oder zusätzlich sind die Strahleinrichtungen 16 entlang der Kühlturmeinbauten 4 bewegbar. Die Bewegung der Strahleinrichtungen 16 erfolgt hierbei bevorzugt durch ein oder mehrere Positioniereinrichtungen 18, worauf im Folgenden noch näher eingegangen wird.

Die vorschlagsgemäße Reinigungsvorrichtung 3 weist vorzugsweise ferner eine Absaugung 17 auf. Die Absaugung 17 ist vorzugsweise dazu ausgebildet, das Strahlgut und/oder das durch das Strahlgut (Trockeneis) gelöstes Material wie Kalk, Algen oder sonstige Beläge oder Kontaminationen der Kühlturmeinbauten 4 aus den Kühlturmeinbauten 4 abzusaugen. Hierbei kann die Absaugung 17 dazu ausgebildet sein oder verwendet werden, in den Kühlturmeinbauten 4 einen Unterdruck bzw. Luftstrom zu erzeugen, der gelöste Partikel mitnimmt und in die Absaugung 17 einzieht.

Die Reinigungsvorrichtung 3 weist vorzugsweise einen Reinigungskopf 19 auf, der die eine oder mehreren Strahleinrichtungen 16 aufweist, insbesondere aufnimmt. Ferner weist der Reinigungskopf 19 vorzugsweise die Positioniereinrichtung 18 auf.

Die Positioniereinrichtung 18 kann dazu ausgebildet sein, die eine oder mehreren Strahleinrichtungen 16 zu bewegen. Besonders bevorzugt sind die eine oder mehreren Strahleinrichtungen 16 durch die Positioniereinrichtung 18 automatisch entlang der Kühlturmeinbauten 4, insbesondere in Gebrauchslage horizontal, und/oder in die Kühlturmeinbauten 4, insbesondere vertikal in Gebrauchslage und/oder axial bezüglich der Strahleinrichtungen 16 zu bewegen.

Hierbei kann vorgesehen sein, dass die eine oder mehreren Strahleinrichtungen 16 in einer Ruheposition bzw. Ausgangslage zumindest im Wesentlichen oder vollständig in dem Reinigungskopf 9 aufgenommen oder versenkt sind. Zur Durchführung der Reinigung können die eine oder mehreren Strahleinrichtungen 16 dann durch die Positioniereinrichtung 18 aus dem Reinigungskopf 19 heraus in die Kühlturmeinbauten 4, insbesondere Füllkörper 4A und/oder durch diese hindurch bewegt werden. Gleichzeitig wird durch die Strahleinrichtungen 16 Strahlgut abgegeben und auf Oberflächen (auch innenliegende) der Kühlturmeinbauten 4 bzw. Füllkörper 4A geschleudert, um den Reinigungseffekt auf Basis der Trockeneis-Strahlreinigung zu bewirken. Auf diese Weise werden die Kühlturmeinbauten 4 zur Reinigung sukzessive mit Strahlgut beaufschlagt.

Alternativ oder zusätzlich sind die Strahleinrichtungen 16 mittels der Positioniereinrichtung 18 entlang der Kühlturmeinbauten 4 bewegbar, wobei die Strahleinrichtungen 16 nicht zwingend aus dem Reinigungskopf 19 herausgefahren werden müssen.

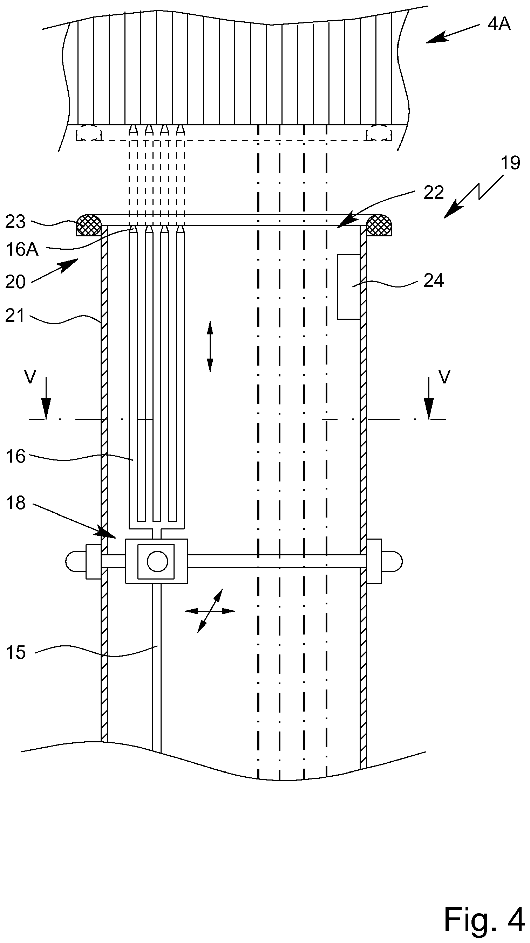

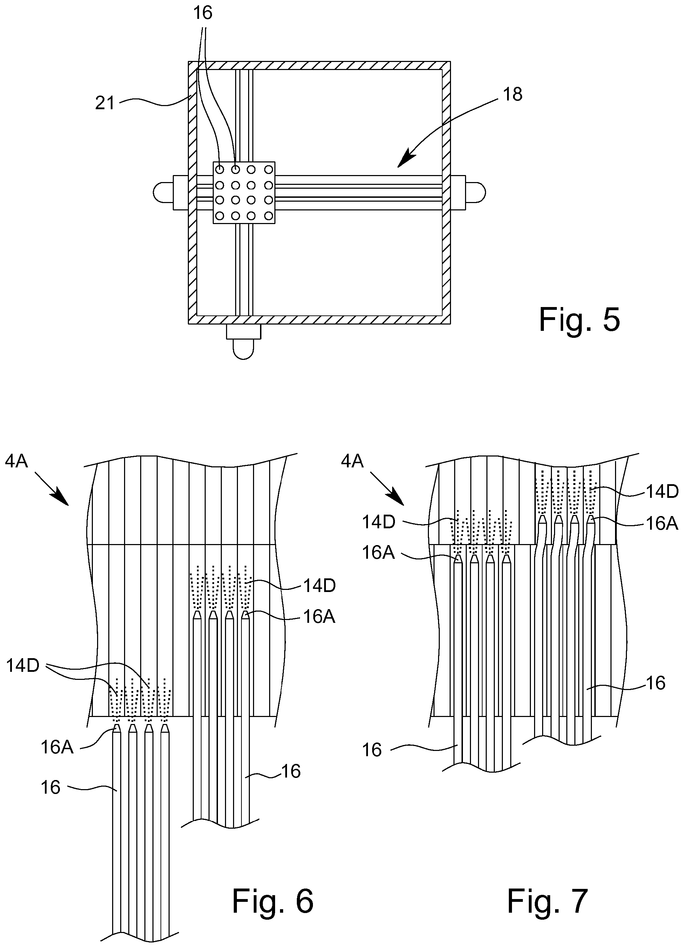

Fig. 5 zeigt in diesem Zusammenhang einen schematischen Querschnitt des Reinigungskopfs 19 gemäß der Schnittlinie V-V aus Fig. 4.

Die Positioniereinrichtung 18 unterstützt hierbei vorzugsweise eine Bewegung der Strahleinrichtungen 16 in mehrere unterschiedliche Dimensionen, besonders bevorzugt in alle drei Raumrichtungen. Zu diesem Zweck kann die Positioniereinrichtung 18 einerseits eine kreuztisch-ähnliche Konstruktion oder andere Lösung zur, bevorzugt translatorischen, Bewegung der Strahleinrichtungen 16 aufweisen. Diese Bewegung in x- und y-Raumrichtungen entspricht in der Gebrauchslage vorzugsweise zumindest im Wesentlichen horizontalen oder parallel zu einer Grenzfläche der Kühlturmeinbauten verlaufende Richtungen.

Alternativ oder zusätzlich ist die Positioniereinrichtung 18 dazu ausgebildet, eine in Gebrauchslage vertikale beziehungsweise in z-Richtung gerichtete Bewegung der Strahleinrichtungen 16 zu ermöglichen oder zu bewirken, wodurch die Strahleinrichtungen 16 in Richtung oder in die Kühlturmeinbauten 4, insbesondere die Füllkörper 4A, bewegbar sind.

Optional kann die Positioniereinrichtung 18 ferner ein Verkippen, Neigen oder Verdrehen der Strahleinrichtungen 16 unterstützen. Dies ermöglicht es, die Strahleinrichtungen 16 auch in nicht korrekt montierte, geneigte oder aus sonstigen Gründen mit nicht-vertikalen Kanälen ausgestattete Kühlanbauten 4 bzw. Füllkörper 4A einzuschieben.

Besonders bevorzugt ist die Kombination einer Bewegung der Strahleinrichtungen 16 entlang der Kühlturmeinbauten 4, insbesondere Füllkörper 4A, und in bzw. durch die Kühlturmeinbauten 4 bzw. Füllkörper 4A. Hierzu kann die Positioniereinrichtung 18 dazu ausgebildet sein, die Strahleinrichtungen 16 in einen Abschnitt der Kühlturmeinbauten 4 bzw. Füllkörper 4A zur Reinigung einzuschieben, diese im Anschluss wieder herauszubewegen, horizontal bzw. entlang der Kühlturmeinbauten 4 zu einem anderen, insbesondere angrenzenden, Abschnitt zu bewegen und diese Vorgehensweise, insbesondere mehrfach, zu wiederholen, um die Kühlturmeinbauten 4 bzw. Füllkörper 4A sukzessive mit Strahlgut (Trockeneis) zu beaufschlagen und auf diese Weise, insbesondere sukzessiv, zu reinigen.

Der Reinigungskopf 19 weist vorzugsweise einen Absaugstutzen 20 auf oder bildet diesen. Zu diesem Zweck kann der Reinigungskopf 19 eine Wandung 21 aufweisen, die an einem offenen Ende eine Absaugöffnung 22 begrenzt, wodurch der Absaugstutzen 20 gebildet sein kann.

Der Absaugstutzen 20 kann eine Dichteinrichtung 23 wie eine Dichtlippe, eine Dichtwulst, einen Dichtring, einen Dichtschlauch o. dgl. aufweisen, die eine beschädigungsfreie Anlage der Reinigungsvorrichtung 3, des Reinigungskopfs 19 bzw. Absaugstutzens 20 an den Kühlturmeinbauten 4 bzw. eine dichtende Anlage der Absaugöffnung 22 an den Kühlturmeinbauten 4 ermöglicht. Die Kühlturmeinbauten 4 können grundsätzlich korrespondierende Dichteinrichtungen aufweisen, was jedoch nicht zwingend und im Darstellungsbeispiel nicht vorgesehen ist.

Im Darstellungsbeispiel gemäß Fig. 4 ist die Reinigungsvorrichtung 3 von dem Kühlturmeinbau 4 in vertikaler Richtung noch beabstandet und kann durch Bewegung des Reinigungskopfs 19 in Richtung der Kühlturmeinbauten 4 an die Kühlturmeinbauten 4 angesetzt werden, so dass die Dichteinrichtung 23 in Kontakt mit den Kühlturmeinbauten 4 kommt, wie in Fig. 4 mit der gestrichelten Dichteinrichtung 23 angedeutet. In dieser Position wird der Reinigungsvorgang bevorzugt durchgeführt.

Durch die Absaugung 17 kann ein Unterdruck in den Kühlturmeinbauten 4 erzeugt werden, so dass Luft und/oder Gas, ggf. gemischt mit Strahlgut und/oder durch den Reinigungsvorgang gelösten Partikel in den Absaugstutzen 20 eingesaugt werden können. Es ist jedoch nicht zwingend notwendig, dass hierfür ein Unterdruck auch in den Kühlturmeinbauten 4 erzeugt wird, obwohl dieses bevorzugt ist, da alternativ oder zusätzlich mit der Absaugung 17 aufgrund der Tatsache, dass der Absaugstutzen 20 in Gebrauchslage unterhalb der zu reinigenden Kühlturmeinbauten 4 angeordnet ist, aus den Kühlturmeinbauten 4 rieselnde, mit dem Strahlverfahren abgetragene Partikel auch lediglich durch Luftströmungen unterhalb bzw. durch Auffangen der Partikel abgesaugt werden können.

Besonders bevorzugt weist der Reinigungskopf 19 die Positioniereinrichtung 18 und die Strahleinrichtungen 16 auf. Hierbei ist die Positioniereinrichtung 18 vorzugsweise dazu ausgebildet, die Strahleinrichtungen 16 relativ zu dem Ansaugstutzen 20 bzw. dessen Wandung 21, innerhalb des Absaugstutzens 20, durch die Absaugöffnung 22 in die Kühlturmeinbauten 4 und/oder durch die Absaugöffnung 22 zurück in den Absaugstutzen 20 zu bewegen. Hierdurch kann erreicht werden, dass durch die Strahleinrichtungen 16 abgegebenes Strahlgut (Trockeneis) unterschiedliche Bereiche der Kühlturmeinbauten 4 erreicht werden. Hierbei kann der Absaugstutzen 20 an derselben Position bleiben, während die Strahleinrichtungen 16 mittels der Positioniereinrichtung 18 den von dem Reinigungskopf 19 bzw. dem Absaugstutzen 20 abgedeckten Bereich der Kühlturmeinbauten 4 nach und nach bzw. sukzessiv reinigt.

In einem Aspekt der vorliegenden Erfindung, der auch unabhängig realisiert werden kann, wird der Reinigungskopf 19 bzw. Absaugstutzen 20 erst dann zu einem anderen Abschnitt der Kühlturmeinbauten 4, insbesondere durch die Verfahreinrichtung 12 und/oder den Teleskoparm 13, bewegt, wenn ein von dem Absaugstutzen 20 bzw. dem Reinigungskopf 19 abgedecktes oder überdecktes Feld der Kühlturmeinbauten 4 durch Bewegung der Strahleinrichtungen 16 sukzessiv gereinigt worden ist. Dies ermöglicht es in vorteilhafter Weise, auch bei beschränkter Leistungsfähigkeit der Trockeneisstrahlvorrichtung 14 eine effektive und schnelle Reinigung zu gewährleisten, während ein stetiges Verfahren des gesamten Reinigungssystems 2 mit ggf. angezeigten Nachjustierungen im Ergebnis nicht nur aufwendiger sondern auch langsamer wäre.

Die Strahleinrichtungen 16 sind vorzugsweise zumindest teilweise länglich oder lanzenartig ausgebildet, sodass diese zur Reinigung in die Kühlturmeinbauten 4 einschiebbar sind. Auf der anderen Seite ist es bevorzugt, dass die Kühlturmeinbauten 4 Kanäle oder fluchtende Öffnungen, Durchbrüche o. dgl. aufweisen, die ein Einschieben der Strahleinrichtungen 16 erlauben.

Ein weiterer, auch unabhängig realisierbarer Aspekt der vorliegenden Erfindung betrifft in diesem Zusammenhang die Kombination des vorschlagsgemäßen Reinigungssystems 2 bzw. der vorschlagsgemäßen Reinigungsvorrichtung 3 mit hierzu korrespondierenden Kühlturmeinbauten 4, die, vorzugsweise in Gebrauchslage vertikale oder von unten zugängliche, Kanäle fluchtende Öffnungen oder Durchbrüche aufweisen oder auf diese oder andere Weise zum Einschieben der lanzenartigen Stahleinrichtungen ausgebildet sind.

Die länglichen bzw. lanzenartigen Strahleinrichtungen 16 sind vorzugsweise aufgrund ihrer Formstabilität in die Kühlturmeinbauten 4 bzw. in Kanäle o. dgl. einschiebbar bzw. ausreichend formstabil, um selbständig eine zumindest im Wesentlichen vertikale Lage bzw. geradlinige Form einzunehmen und/oder zu halten. Hierzu können sie, wie bereits zuvor erläutert, durch die Positioniereinrichtung 18 axial bzw. entlang ihrer Längserstreckung in die Kühlturmeinbauten 4 bewegbar sein, um unterschiedliche Bereiche der Kühlturmeinbauten 4 zu erreichen. Figur 6 zeigt in diesem Zusammenhang die Strahleinrichtungen 16 einerseits in einer nicht in die Kühlturmeinbauten 4 eingeschobenen Position, aus der die Strahleinrichtungen 16 entweder in die Kühlturmeinbauten 4 eingeschoben oder entlang (einer Grenzfläche, Oberfläche oder einem Übergang zum Prozessraum) bewegt werden, andererseits in einer teilweise eingeschobenen Position.

In einem, auch unabhängig realisierbaren Aspekt der vorliegenden Erfindung sind die Strahleinrichtungen 16 zwar grundsätzlich formstabil, jedenfalls abschnittsweise jedoch zusätzlich flexibel und/oder elastisch, insbesondere sodass bei Einschieben der Strahleinrichtungen 16 in die Kühleinbauten 4 Hindernisse innerhalb der Kühlturmeinbauten 4 durch Verformung der Strahleinrichtungen 16 umgangen werden können. Dies ist exemplarisch in Fig. 7 gezeigt.

Dies ist insbesondere hilfreich im Zusammenhang mit mehrlagig aufgebauten Kühlturmeinbauten 4, also Kühlturmeinbauten 4, die in Gebrauchslage vertikaler Richtung unterschiedliche Schichten mit einem Übergang zwischen den Schichten aufweisen. Der Übergang kann dazu führen, dass durch die Kühlturmeinbauten 4 gebildete Kanäle nicht vollständig miteinander fluchten. Um auch in solchen Fällen den der Reinigungsvorrichtung 3 abgewandten Teil der Kühlturmeinbauten 4 reinigen zu können, ermöglichen die jedenfalls abschnittsweise flexiblen bzw. elastischen Strahleinrichtungen 16 eine automatische Richtungsanpassung während des Einschiebens der Strahleinrichtungen 16 in die Kühlturmeinbauten 4, so dass die Wahrscheinlichkeit wesentlich erhöht wird, dass die Kühlturmeinbauten 4 in der in Gebrauchslage vertikalen Erstreckung bzw. in einer Richtung, in die die Strahleinrichtungen 16 bewegbar sind, vollständig durchfahren und gereinigt werden können.

Die Reinigungsvorrichtung 3, insbesondere der Reinigungskopf 19, weist vorzugsweise eine Sensoreinrichtung 24, insbesondere mit einer Kamera, auf, wodurch die Reinigungsvorrichtung 3 die Strahleinrichtungen 16 automatisch im Hinblick auf durch die Kühlturmeinbauten 4 gebildete Kanäle, Öffnungen o. dgl. justieren kann, so dass die Strahleinrichtungen 16 in die Kühlturmeinbauten 4 eingeschoben werden können, ohne die Integrität der Kühlturmeinbauten 4 zu beeinträchtigen, diese also zu beschädigen.

Die Sensoreinrichtung 24 ist hierbei vorzugsweise zur Erkennung der Position, Lage und/oder Ausrichtung der Kühlturmeinbauten 4 und/oder der einen oder mehreren Strahleinrichtungen 16 ausgebildet. Hierdurch kann eine automatische Positionierung und Justierung der Strahleinrichtungen 16 auch bei nicht vorschriftsgemäß eingebauten Kühlturmeinbauten 4 erreicht oder gewährleistet werden. Dies erhöht folglich die Zuverlässigkeit des Reinigungssystems 2 bzw. der Reinigungsvorrichtung 3.

Im Darstellungsbeispiel ist die Sensoreinrichtung 24 mit einer Kamera ausgerüstet, die bei laufender Reinigung zum Schutz abdeckbar ist. Alternativ oder zusätzlich kann die Sensoreinrichtung 24 jedoch dazu ausgebildet sein, andere optische oder bildgebende Verfahren einzusetzen, beispielsweise eine Infrarot- oder Laserabtastung. Alternativ oder zusätzlich kann die Sensoreinrichtung 24 eine Erfassung der Struktur der Kühlturmeinbauten 4 mit Ultraschall oder Radar unterstützen, wobei insbesondere die Radar- bzw. Mikrowellenabtastung den Vorteil einer weitestgehenden Störunempfindlichkeit mit sich bringt. Grundsätzlich kann die Sensoreinrichtung 24 alternativ oder zusätzlich jedoch auch andere, beispielsweise mechanische Abtastverfahren o. dgl. unterstützen, um die Position, Lage und/oder Ausrichtung der Kühlturmeinbauten 4, Öffnungen oder Kanäle dieser und/oder der Strahleinrichtungen 16 bzw. Position, Lage und/oder Ausrichtung dieser zueinander zu ermitteln und/oder zu steuern und/oder zu regeln.

Die Reinigungsvorrichtung 3 weist vorzugsweise eine Steuereinrichtung 25 auf, die im Darstellungsbeispiel gemäß Fig. 3 Teil der Trockeneisstrahlvorrichtung 14 bilden kann, grundsätzlich jedoch auch getrennt hiervon realisiert sein kann.

Die Steuereinrichtung 25 ist vorzugsweise dazu ausgebildet, die Positioniereinrichtung derart zu steuern, dass die Strahleinrichtungen 16 in einer ersten Position in die Kühlturmeinbauten 4 eingeschoben werden, im Anschluss wieder aus den Kühlturmeinbauten 4 hinausbewegt bzw. herausgezogen werden, woraufhin die Strahleinrichtungen 16 durch Bewegen horizontal in Bezug auf die Gebrauchslage bzw. quer zur Längserstreckung der Strahleinrichtungen 16 in eine von der ersten abweichende zweite Position gebracht werden, um ausgehend von dieser Position durch erneutes Einschieben der Strahleinrichtungen 16 in die Kühlturmeinbauten 4 einen anderen Abschnitt der Kühlturmeinbauten 4 zu reinigen. Auf diese Weise ermöglicht die vorschlagsgemäße Steuereinrichtung 25 die sukzessive Reinigung der Kühlturmeinbauten 4, insbesondere automatisch in einem von dem Absaugstutzen 20 bzw. dem Reinigungskopf 19 begrenzten Bereich.

Die Steuereinrichtung 25 kann alternativ oder zusätzlich auch dazu ausgebildet sein, die Reinigungsvorrichtung 3 bzw. den Reinigungskopf 19 und/oder den Absaugstutzen 20 nach erfolgter Reinigung eines hiervon überdeckten Abschnitts der Kühlturmeinbauten 4 zu einem weiteren, insbesondere benachbarten Abschnitt zu bewegen.

Die Steuerungseinrichtung 25 kann alternativ oder zusätzlich dazu ausgebildet sein, bereits gereinigte Abschnitte mit einem Plan des Kühlturms 1 zu vergleichen, zu verzeichnen und auf diese Weise eine Reinigung der zumindest im Wesentlichen gesamten Kühlturmeinbauten 4 des Kühlturms 1 zu steuern oder zu bewirken.

In einem weiteren Aspekt der vorliegenden Erfindung ist vorgesehen, dass die Positioniereinrichtung 18 eine Detektionseinrichtung 26 aufweist, die dazu ausgebildet und eingerichtet ist, ein Hindernis zu erkennen, das einem Vorschub ein oder mehrerer der Strahleinrichtungen 16 in die Kühlturmeinbauten 4 entgegenwirkt. Insbesondere kann durch die Detektionseinrichtung 16 eine dem Einschieben der Strahleinrichtungen 16 entgegenwirkende Kraft (Gegenkraft) detektiert werden.

In Abhängigkeit von der Detektion eines Hindernisses bzw. einer Gegenkraft kann eine Bewegung einer oder mehrerer der Strahleinrichtungen 16 bewirkt werden, um das Hindernis zu bewältigen. Vorzugsweise können jedenfalls diejenigen Strahleinrichtungen 16, bei denen ein Hindernis bzw. eine entgegenwirkende Kraft detektiert worden ist, derart bewegt oder beeinflusst werden, dass zur Hindernisumgehung eine Verformung der Strahleinrichtung oder Strahleinrichtungen 16 ermöglicht wird.

Insbesondere wird bei Detektion bzw. Hinderniserkennung oder Gegenkraft eine axiale Bewegung, ein oder mehrere Bewegungen quer zur Längsachse der ein oder mehreren Strahleinrichtungen 16 und/oder Drehungen um die Längsachse der jeweiligen Strahleinrichtungen 16 bzw. ein Neigen, Schwenken und/oder Rütteln der Strahleinrichtungen 16 bewirkt, sodass - insbesondere durch die Elastizität der Strahleinrichtungen 16 - eine Änderung der Einschubrichtung jedenfalls im Bereich eines offenen Endes der Strahleinrichtungen 16 bewirkt wird, wodurch das Hindernis überwunden werden kann.

Grundsätzlich ist es jedoch auch denkbar, dass andere Maßnahmen bei einer Hinderniserkennung ergriffen werden und/oder dass alle Strahleinrichtungen 16 in gleicher oder ähnlicher Weise bewegt oder beeinflusst werden und/oder dass diejenigen Strahleinrichtungen 16, bei denen ein Hindernis erkannt wird bzw. detektiert worden ist, nicht weiter vorangetrieben werden, während Strahleinrichtungen 16, bei denen kein Hindernis detektiert wird, weiter in bzw. durch die Kühlturmeinbauten 4 geschoben werden.

Die Absaugung 17 ist vorzugsweise dazu ausgebildet, von den Kühlturmeinbauten 4 gelöste Bestandteile bzw. Partikel der Kontamination bzw. des Belags der Kühlturmeinbauten 4 abzuscheiden. Besonders bevorzugt ist ein, insbesondere mehrstufiges, Filtersystem vorgesehen. Hierbei kann ein Zyklonabscheider 17B verwendet werden, um größere und/oder schwerere Partikel aus dem abgesaugten Medium zu entfernen.

Insbesondere wird Medium einschließlich von den Kühlturmeinbauten 4 gelöster Partikel aus den Kühlturmeinbauten 4 oder unter den Kühlturmeinbauten 4 in den Absaugstutzen 20 eingesaugt, was im Darstellungsbeispiel dadurch bewirkt wird, dass mit einem Lüfter 17A, insbesondere Radiallüfter, ein Unterdruck erzeugt wird.

Das abgesaugte Medium wird in einen äußeren Raum des Zyklonabscheiders 17B zumindest im Wesentlichen tangential zur Außenwand eines Außenbehälters 17D und/oder quer oder senkrecht zu einem Tauchrohr 17D eingeleitet, wodurch abgesaugtes Medium in Rotation versetzt und in Folge dessen im abgesaugten Medium enthaltenen Partikel durch die Zentrifugalkraft nach außen getrieben und in einem Auffangbehälter 17F aufgefangen werden können.

Das durch den Zyklonabscheider 17A oder einen anderen Vorfiltervon groben bzw. schwereren Partikeln gesäuberte Medium strömt im Anschluss durch das Tauchrohr 17D zum Ansaugtrakt des Lüfters 17A, der das Medium über einen optionalen Feinstaubfilter 17G nach außen befördert.

In einem weiteren, auch unabhängig realisierbaren Aspekt der vorliegenden Erfindung wird die vorschlagsgemäße Reinigungsvorrichtung 3 zur Reinigung von in ihrer Gebrauchslage in einem Kühlturm 1, insbesondere Naturzug-Kühlturm, eingebauten Kühlturmeinbauten 4 verwendet.

Alternativ oder zusätzlich betrifft die vorliegende Erfindung in einem weiteren, auch unabhängig realisierbaren Aspekt ein Verfahren zur Reinigung von in Gebrauchslage befindlichen Kühlturmeinbauten 4 mit einer vorschlagsgemäßen Reinigungsvorrichtung 3. Hierbei ist eine Trockeneisstrahlvorrichtung 14 vorgesehen, mit deren Strahleinrichtungen 16 Trockeneis als Strahlgut beschleunigt abgebbar ist. Diese Strahleinrichtungen 16 werden in Kühlturmeinbauten 4 eingeschoben und/oder entlang der Kühlturmeinbauten 4 bewegt.

Die Reinigungsvorrichtung 3 weist vorzugsweise eine Absaugung 17 auf, mit der durch das Strahlgut 14D bzw. Trockeneis gelöstes Material bzw. gelöste Partikel, insbesondere gelöste Ablagerungen bzw. Kontaminationen, aus den Kühlturmeinbauten 4 abgesaugt wird/werden.

Die bevorzugt länglichen bzw. lanzenartigen Strahleinrichtungen 16 weisen vorzugsweise eine Längserstreckung auf, die ein zumindest im Wesentlichen vollständiges Durchdringen der Kühlturmeinbauten 4 ermöglicht. Insbesondere weisen die Strahleinrichtungen 16 eine Längserstreckung von mehr als 1 m, insbesondere mehr als 1,50 m oder 2 m auf. Der, insbesondere maximale und/oder durchschnittliche und/oder zumindest im Wesentlichen über die Längserstreckung konstante, Durchmesser der Strahleinrichtungen 16 beträgt vorzugsweise weniger als 10 cm, insbesondere weniger als 8 oder 5 cm, im Darstellungsbeispiel zwischen 2,5 und 4 cm.

Das offene Ende der Strahleinrichtungen 16 weist vorzugsweise einen sich zum offenen Ende hin verjüngenden Querschnitt auf, insbesondere eine Spitze o. dgl., was ein Einschieben der Strahleinrichtungen 16 in die Kühlturmeinbauten 4 erleichtert. Dieser Verlauf kann durch die Strahldüse(n) 16A oder auf andere Weise gebildet sein.

Zur Reinigung werden die Strahleinrichtungen 16 vorzugsweise mindestens 50 %, vorzugsweise mindestens 60 % oder 70 % der Erstreckung der Kühlturmeinbauten 4, insbesondere Füllkörper 4A, in einer Richtung längs oder entlang der Strahleinrichtungen 16 in die Kühlturmeinbauten 4 eingeschoben.

In einer bevorzugten Anwendung werden die Strahleinrichtungen 16 durch die Füllkörper 4A zumindest im Wesentlichen durchgeschoben. Hierdurch wird ermöglicht, auf der der Reinigungsvorrichtung 3 abgewandten bzw. in Gebrauchslage oberen Seite der Füllkörper 4A weitere Kühlturm-Komponenten bzw. Kühlturmeinbauten 4, insbesondere die Tropfenabscheider 4B und/oder die Sprüheinrichtungen 6 ebenfalls mittels der Strahleinrichtungen 16 zu reinigen.

Es ist also bevorzugt, dass die Füllkörper 4A sowie sonstige Kühlturmeinbauten 4, insbesondere Tropfenabscheider 4B und/oder Sprüheinrichtungen 6 des Kühlturms 1 mit derselben Strahleinrichtung 16 bzw. in einem gemeinsamen Reinigungsschritt gereinigt werden. Hier sind jedoch auch andere Lösungen denkbar.

Weiter ist eine diskontinuierliche bzw. abschnittsweise Reinigung der Kühlturmeinbauten 4 bevorzugt. Hierbei ist vorzugsweise vorgesehen, zunächst einen, insbesondere von dem Reinigungskopf 19 bzw. Absaugstutzen 20 überdeckten, Abschnitt der Kühlturmeinbauten zu reinigen, im Anschluss den Reinigungskopf 19 bzw. den Absaugstutzen 20 zu einem anderen Abschnitt der Kühlturmeinbauten 4 zu bewegen und im Anschluss diesen anderen Abschnitt der Kühlturmeinbauten 4 zu reinigen. Dieses Verfahren kann soweit fortgesetzt werden, bis zumindest im Wesentlichen alle Bereiche der Kühlturmeinbauten 4 gereinigt worden sind.

Das Verfahren wird vorzugsweise ferner automatisiert, indem zu reinigende und/oder bereits gereinigte Kühlturmeinbauten elektronisch oder auf sonstige Weise identifiziert werden. Grundsätzlich ist auch eine automatische Positionierung des Reinigungskopfes 19 bzw. des Absaugstutzens 20 möglich und vorteilhaft, auch wenn nicht zwingend vorgesehen.

Zur Reinigung weist der Reinigungskopf 19 vorzugsweise mehrere, insbesondere mindestens vier, sechs, neun, zwölf oder mehr Strahleinrichtungen 16 auf. Diese Strahleinrichtungen 16 können gleichzeitig in die Kühlturmeinbauten 4, insbesondere die Füllkörper 4A, eingeschoben werden.

Die Strahleinrichtungen 16 sind bezüglich ihrer Längserstreckung vorzugsweise zumindest im Wesentlichen parallel zueinander angeordnet. Ein Abstand zwischen den Strahleinrichtungen 16 kann eingestellt werden oder einstellbar sein, insbesondere um eine Anpassung an unterschiedliche Kühlturmeinbau-Strukturen, insbesondere Kanalabstände von Kanälen in den Füllkörpern 4A zu ermöglichen.

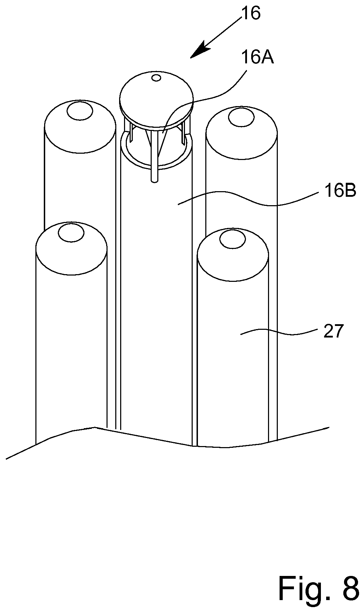

Fig. 8 zeigt in einer perspektivischen Ansicht eine vorschlagsgemäße Strahleinrichtung 16. Die Strahleinrichtung 16 weist eine Strahldüse 16A auf, die vorzugsweise dazu ausgebildet ist, entlang oder axial bzw. in Richtung der Längserstreckung der Strahleinrichtung 16 beschleunigtes Strahlgut 14D umzulenken, vorzugsweise sodass das Strahlgut 14D seitlich bzw. quer zur Längserstreckung der Strahleinrichtung 16 abgegeben wird oder abgegebbar ist.

Vorzugsweise weist die Strahldüse 16A zur Abgabe von Strahlgut 14D quer zur Längserstreckung der Strahleinrichtung 16 vorgesehene bzw. seitliche Öffnungen auf.

Alternativ oder zusätzlich weist die Strahldüse 16A eine oder mehrere Ablenkeinrichtungen zur seitlichen Ablenkung des Strahlguts 14D auf. Im Darstellungsbeispiel weist die Strahldüse 16A zu diesem Zweck ein zu einer Mittelachse der Strahleinrichtung 16 koaxial angeordnet und/oder symmetrisch, insbesondere rotationssymmetrisch, gebildeten Umlenkabschnitt auf. Dieser Umlenkabschnitt kann einen Durchmesser aufweisen, der sich in Richtung eines rohrartigen Strahleinrichtungs-Körpers 16B verjüngt und/oder in eine primäre Strömungsrichtung erweitert, sodass ein, bevorzugt stetiges oder kontinuierliches, Umlenken von Strahlgut 14D bzw. Strahlgut-Druckgas-Gemischs ermöglicht.

Im Darstellungsbeispiel ist der Strahleinrichtungskörper 16B als Schlauch oder Rohr ausgebildet und wird bei Verwendung der Reinigungsvorrichtung 3 bzw. Abgabe von Strahlgut 14D zumindest im Wesentlichen axial durchströmt. Der Strahleinrichtungskörper 16B weist im Darstellungsbeispiel an einem offenen bzw. nicht mit der Leitung 15 verbundenen Ende die Strahldüse 16A auf.

Die Strahldüse 16A ist im Darstellungsbeispiel mit einer Spitze oder Kappe oder sonstigen Führeinrichtung zur Führung der Strahleinrichtung 16 entlang eines Kanals der Kühlturmeinbauten 4 ausgebildet. Hier gibt es jedoch auch andere Lösungsalternativen.

Im Darstellungsbeispiel gemäß Fig. 8 sind neben bzw. parallel zu der Strahleinrichtung 16 ein oder mehrere, lanzenartige, Reinigungsstäbe 27 angeordnet.

Die Reinigungsstäbe 27 verlaufen vorzugsweise zumindest im Wesentlichen parallel zu der Strahleinrichtung 16. Die Reinigungsstäbe 27 sind vorzugsweise dazu ausgebildet, ebenfalls in Kühlturmeinbauten 4, insbesondere Füllkörper 4A, einschiebbar zu sein. Ferner sind die Reinigungsstäbe 27 vorzugsweise zur mechanischen Reinigung der Kühlturmeinbauten 4 ausgebildet.

Die Reinigungsstäbe 27 sind vorzugsweise kürzer als die Strahleinrichtung 16, sodass die Strahleinrichtung 16 bzw. die Strahldüse 16A das Ende der Reinigungsstäbe 27 überragt.

Mit den Reinigungsstäben 27 in Kombination mit der Strahleinrichtung 16 kann gleichzeitig eine Reinigung durch Trockeneisstrahlen und mechanische Ablösung von Partikeln bzw. Kontaminationen erfolgen. Diese Kombination hat sich als besonders vorteilhaft erwiesen. So ist es möglich, dass durch die Strahleinrichtung 16 Kontamination bzw. Belag der Kühlturmeinbauten 4, insbesondere Füllkörper 4A, vereist wird und die nachfolgende mechanische Beanspruchung der Beläge durch die Reinigungsstäbe 27 in besonders effektiver Weise eine Entfernung dieser Beläge ermöglicht.

Es ist bevorzugt, dass mehreren Strahleinrichtungen 16 jeweils ein oder mehrere Reinigungsstäbe 27 zugeordnet bzw. diese Reinigungsstäbe benachbart zu der jeweiligen Strahleinrichtung 16 angeordnet sind, insbesondere derart und/oder verstellbar, dass die Strahleinrichtung 16 mit den Reinigungsstäben 27 gleichzeitig in die Kühlturmeinbauten 4, insbesondere Füllkörper 4A, einschiebbar sind.

Grundsätzlich ist vorgesehen, dass die Reinigungsvorrichtung 3 mehrere Strahleinrichtungen 16, optional jeweils mit benachbarten Reinigungsstäben 27, aufweist. Insbesondere kann die Reinigungsvorrichtung 3 mehr als 2, vorzugsweise mehr als 3, insbesondere mehr als 4 oder 5 Strahleinrichtungen 16 und/oder weniger als 20, vorzugsweise weniger als 15, insbesondere weniger als 10 Strahleinrichtungen 16 aufweisen.

Im Darstellungsbeispiel gemäß Fig. 8 sind jeder Strahleinrichtung 16 vier Reinigungsstäbe 27 zugeordnet bzw. benachbart hierzu angeordnet. Als besonders vorteilhaft hat sich die Anordnung zwischen zwei und sechs Reinigungsstäben 27 und/oder die Verwendung einer Strahleinrichtung 16 mit einer Anzahl benachbarter Reinigungsstäbe 27 ergeben, wobei die Anzahl der in der Struktur der Kühlturmeinbauten 4 bzw. Füllkörper 4A zu einem hierin vorgesehen Kanal unmittelbar benachbarten Kanäle entspricht.

Im Darstellungsbeispiel weisen die Reinigungsstäbe 27 am offenen Ende jeweils einen spitzen, sich verjüngenden, insbesondere konisch zulaufenden bzw. zylinderstumpf-artigen offenen Endbereich auf. Hier sind jedoch grundsätzlich auch andere Formen möglich.

Die Strahleinrichtungen 16 und/oder die Reinigungsstäbe 27 weisen vorzugsweise einen zumindest im Wesentlichen konstanten Querschnitt oder Durchmesser auf. Insbesondere sind die Strahleinrichtungen 16 und/oder die Reinigungsstäbe 27 zumindest im Wesentlichen zylindrisch. Grundsätzlich sind andere, insbesondere ovale oder mehreckige Querschnitte jedoch nicht ausgeschlossen.

Im Folgenden wird die Erfindung in Zusammenhang mit den Strahleinrichtungen 16 ohne die Reinigungsstäbe 27 weiter erläutert, wobei für die Bewegung der Reinigungsstäbe entsprechendes gelten kann. Die Reinigungsstäbe 27 sind also bevorzugt unbeweglich in Bezug auf die Strahleinrichtung(en) 16 und können vorgesehen sein, auch wenn diese nicht explizite Erwähnung finden.

Zur Reinigung eines Abschnitts der Kühlturmeinbauten 4, insbesondere der Füllkörper 4A, sind die Strahleinrichtungen 16, vorzugsweise innerhalb des Absaugstutzens 20, entlang der Kühlturmeinbauten 4 bzw. entlang einer Oberfläche der Kühlturmeinbauten 4 bzw. Füllkörper 4A, verschiebbar. Auf diese Weise kann der Abschnitt der Kühlturmeinbauten 4, der durch den Reinigungskopf 19 bzw. den Absaugstutzen 20 überdeckt ist, seinerseits in Reinigungsabschnitte unterteilt sein oder werden, die durch die Reinigungsvorrichtung 3 nacheinander bzw. sukzessive gereinigt werden.

Grundsätzlich ist eine Reinigung der Kühlturmeinbauten auch ohne Einschieben der Strahleinrichtungen 16 in die Kühlturmeinbauten 4 möglich. Dies ist insbesondere dann vorteilhaft, wenn die Kühlturmeinbauten 4, insbesondere die Füllkörper 4A, keine geeigneten Kanäle zum Einschieben der Strahleinrichtungen 16 aufweisen. In diesen Fällen kann eine ausreichende Reinigungsleistung jedenfalls bei verhältnismäßig dünnen Kühlturmeinbauten 4 erreicht werden. In diesem Fall ist es bevorzugt, dass die Strahleinrichtungen 16 in dem von dem Reinigungskopf 19 bzw. dem Ansaugstutzen 20 überdeckten Bereich der Kühlturmeinbauten 4 entlang der Kühlturmeinbauten 4 bewegt werden. Hierdurch ist jedenfalls eine abschnittsweise Reinigung möglich.

Für eine oberflächliche Reinigung der Kühlturmeinbauten 4, also ohne Einschieben der Strahleinrichtungen 16 in die Kühlturmeinbauten 4, können dieselben Strahleinrichtungen 16 verwendet werden, wie zuvor beschrieben. Alternativ oder zusätzlich können jedoch auch andere Strahleinrichtungen 16, insbesondere aufweisend Fächerdüsen, vorgesehen sein oder verwendet werden.

Auch wenn die vorliegende Erfindung anhand eines besonders bevorzugten Ausführungsbeispiels näher erläutert worden ist, können die in diesem Zusammenhang erläuterten Aspekte auch unabhängig hiervon und unabhängig voneinander realisiert werden.

Insbesondere kann die vorschlagsgemäße Reinigungsvorrichtung 3 bzw. das vorschlagsgemäße Reinigungssystem 2 auch zu anderen Zwecken, insbesondere in anderen Kühltürmen als einem Naturzug-Kühlturm wie im vorliegenden Ausführungsbeispiel eingesetzt werden und vorteilhaft sein.

Ferner ist nicht ausgeschlossen, dass Aspekte, insbesondere betreffend die sukzessive Reinigung mittels der Strahleinrichtungen 16 auch unabhängig von dem besonders bevorzugten Trockeneis-Strahlverfahren einsetzbar, beispielsweise mit anderen Strahlverfahren oder auch mit sonstigen Reinigungsverfahren mit sonstigen Medien oder mechanischen Reinigungsschritten sind.

Alternativ oder zusätzlich ist es möglich, die Trockeneisreinigung auch ohne Absaugung 17 einzusetzen, beispielsweise wenn gelöste Partikel lediglich aufgefangen werden o. dgl. Daher ist es insbesondere für Aspekte betreffend die Justierung und/oder den Aufbau und/oder die Bewegung der Strahleinrichtungen 16 nicht zwingende Voraussetzung, dass auch eine Absaugung 17 vorgesehen ist.

Insbesondere ist nicht ausgeschlossen, dass der Reinigungskopf 19 nicht gleichzeitig den Absaugstutzen 20 bildet, obwohl dies ebenfalls bevorzugt ist. Grundsätzlich kann der Absaugstutzen 20 vom Reinigungskopf 19 auch getrennt werden, insbesondere wenn der Absaugstutzen 20 und der Reinigungskopf 19 von unterschiedlichen Seiten zur Reinigung der Kühlturmeinbauten 4 verwendet wird.

**Bezugszeichenliste:**

| | | | |
|---|---|---|---|
| 1 | Kühlturm | 15 | Leitung |
| 1A | Außenwand | 16 | Strahleinrichtungen |
| 2 | Reinigungssystem | 16A | Strahldüse |
| 3 | Reinigungsvorrichtung | 16B | Strahleinrichtungskörper |
| 4 | Kühlturmeinbauten | 17 | Absaugung |
| 4A | Füllkörper | 17A | Lüfter |
| 4B | Tropfenabscheider | 17B 17C | Zyklonabscheider Einlass |
| 5 | Prozessraum | 17D | Außenbehälter |
| 6 | Sprüheinrichtung | 17E | Tauchrohr |
| 7 | Warmwasserzulauf | 17F 17G | Auffangbehälter Feinstaubfilter |
| 8 | Lufteintrittsöffnung | | |
| 8A | Umgebungsluft | 18 | Positioniereinrichtung |
| 9 | Luftaustrittsöffnung | 19 | Reinigungskopf |
| 9A | Abluft | 20 | Absaugstutzen |
| 10 | Wasserauffangeinrichtung | 21 | Wandung |
| 11 | Kühlwasserablauf | 22 | Absaugöffnung |
| 12 | Verfahreinrichtung | 23 | Dichteinrichtung |
| 13 | Teleskoparm | 24 25 | Sensoreinrichtung |
| 14 | Trockeneisstrahlvorrichtung | | Steuereinrichtung |
| 14A | Trockeneisvorrat | 26 | Detektionseinrichtung |
| 14B | Druckgassystem | 27 | Reinigungsstab |
| 14C | Mischer | | |
| 14D | Strahlgut | | |

## Patentansprüche

1. Reinigungsvorrichtung (3) zur Reinigung von Kühlturmeinbauten (4), wobei die Reinigungsvorrichtung (3) eine Trockeneisstrahlvorrichtung (14) aufweist, die eine oder mehrere Strahleinrichtungen (16) zur Abgabe von Strahlgut (14D) aufweist, die in die Kühlturmeinbauten (4) einschiebbar und/oder entlang der Kühlturmeinbauten (4) bewegbar sind, und wobei die Reinigungsvorrichtung (3) eine Absaugung (17) aufweist, die dazu ausgebildet ist, durch das Strahlgut (14D) gelöstes Material aus den Kühlturmeinbauten (4) abzusaugen.

2. Reinigungsvorrichtung gemäß Anspruch 1, **dadurch gekennzeichnet, dass** die Reinigungsvorrichtung (3) eine Positioniereinrichtung (18) aufweist, die dazu ausgebildet ist, die eine oder mehreren Strahleinrichtungen (16) automatisch entlang der und/oder in die Kühlturmeinbauten (4) zu bewegen, während durch die Strahleinrichtungen (16) Strahlgut (14D) abgegeben wird, sodass die Kühlturmeinbauten (4) zur Reinigung sukzessive mit Strahlgut (14D) beaufschlagt werden.

3. Reinigungsvorrichtung gemäß Anspruch 1 oder 2, **dadurch gekennzeichnet, dass** die Reinigungsvorrichtung (3) einen Reinigungskopf (19) aufweist, der die eine oder mehreren Strahleinrichtungen (16) aufweist, vorzugsweise wobei benachbart und/oder parallel zu der oder den Strahleinrichtungen (16) Reinigungsstäbe (27) zur mechanischen Reinigung angeordnet sind.

4. Reinigungsvorrichtung gemäß Anspruch 3, **dadurch gekennzeichnet, dass** der Reinigungskopf (19) einen Absaugstutzen (20) aufweist, der eine Absaugöffnung (22) der Absaugung (17) begrenzt und dazu ausgebildet ist, an die Kühlturmeinbauten (4) angenähert oder angelegt zu werden, sodass durch die Absaugung (17) ein Unterdruck in den Kühlturmeinbauten (4) erzeugbar und/oder von den Kühlturmeinbauten (4) gelöstes Material aus den Kühlturmeinbauten (4) absaugbar ist.

5. Reinigungsvorrichtung gemäß der Ansprüche 2 bis 4, **dadurch gekennzeichnet, dass** der Reinigungskopf (19) die Positioniereinrichtung (18) aufweist, wobei die Positioniereinrichtung (18) dazu ausgebildet ist, die eine oder mehreren Strahleinrichtungen (16) relativ zu dem Absaugstutzen (20), innerhalb des Absaugstutzens (20), durch die Absaugöffnung (22) hinaus in die Kühlturmeinbauten (4) und/oder durch die Absaugöffnung (22) zurück in den Absaugstutzen (20) zu bewegen, sodass mit dem durch die eine oder mehreren Strahleinrichtungen (16) abgebbaren Strahlgut unterschiedliche Bereiche der Kühlturmeinbauten (4) erreichbar sind.

6. Reinigungsvorrichtung gemäß einem der voranstehenden Ansprüche, **dadurch gekennzeichnet, dass** die eine oder mehreren Strahleinrichtungen (16) zumindest teilweise länglich oder lanzenartig ausgebildet sind, sodass die eine oder mehreren Strahleinrichtungen (16) zur Reinigung in die Kühlturmeinbauten (4) einschiebbar sind.

7. Reinigungsvorrichtung gemäß Anspruch 6, **dadurch gekennzeichnet, dass** die Strahleinrichtungen (16) durch die Positioniereinrichtung (18) quer zu und/oder entlang ihrer Längserstreckung bewegbar sind, um unterschiedliche Bereiche der Kühlturmeinbauten (4) zu erreichen.

8. Reinigungsvorrichtung gemäß einem der voranstehenden Ansprüche, **dadurch gekennzeichnet, dass** die eine oder mehreren Strahleinrichtungen (16) formstabil und zumindest abschnittsweise flexibel und/oder elastisch sind, sodass bei Einschieben in die Kühlturmeinbauten (4) Hindernisse durch Verformung der Strahleinrichtungen (16) umgehbar sind.

9. Reinigungsvorrichtung gemäß einem der voranstehenden Ansprüche, **dadurch gekennzeichnet, dass** die Reinigungsvorrichtung (3) zur Reinigung von in ihrer Gebrauchslage befindlichen Kühlturmeinbauten (4) eines Kühlturms (1), insbesondere Naturzugkühlturms, ausgebildet ist, wobei die Reinigungsvorrichtung (3) im Prozessraum (5) des Kühlturms (1) verfahrbar und/oder teleskopierbar ist, um die eine oder mehreren Strahleinrichtungen (16) zu den Kühlturmeinbauten (4) und/oder zu unterschiedlichen Abschnitten der Kühlturmeinbauten (4) zu bewegen.

10. Reinigungsvorrichtung gemäß einem der voranstehenden Ansprüche, **dadurch gekennzeichnet, dass** die Reinigungsvorrichtung (3) eine Sensoreinrichtung (24) zur Erkennung der Position, Lage und/oder Ausrichtung der Kühlturmeinbauten (4) und/oder der einen oder mehreren Strahleinrichtungen (16) aufweist.

11. Reinigungsvorrichtung gemäß einem der Ansprüche 2 bis 10, **dadurch gekennzeichnet, dass** die Reinigungsvorrichtung (3) eine Steuereinrichtung (14) aufweist, die dazu ausgebildet ist, die Positioniereinrichtung (18) derart zu steuern, dass die eine oder mehreren Strahleinrichtungen (16) in einer ersten Position die Kühlturmeinbauten (4) eingeschoben werden, im Anschluss wieder aus den Kühlturmeinbauten (4) hinausbewegt werden, woraufhin die Strahleinrichtungen (16) durch in Bezug auf die Gebrauchslage horizontale bzw. quer zur Längserstreckung der Strahleinrichtungen (16) verlaufende Richtung in eine von der ersten abweichende zweite Position bewegt werden, um in dieser zweiten Position in einen von der ersten Position abweichenden Abschnitt der Kühlturmeinbauten (4) einschiebbar zu sein.

12. Reinigungsvorrichtung gemäß einem der Ansprüche 2 bis 11, **dadurch gekennzeichnet, dass** die Positioniereinrichtung (18) eine Detektionseinrichtung (26) aufweist, die dazu ausgebildet und eingerichtet ist, ein Hindernis zu detektieren das einem Vorschub einer oder mehrerer der Strahleinrichtungen (16) in die Kühlturmeinbauten (4) entgegenwirkt, insbesondere eine dem Einschub entgegenwirkende Kraft zu detektieren und in Abhängigkeit von dieser Detektion oder Kraft eine Bewegung jedenfalls der einen oder mehreren Strahleinrichtungen (16) zu bewirken, vorzugsweise sodass zur Hindernisumgehung eine Verformung der Strahleinrichtung/-en (16) durch das Hindernis und die Bewegung bewirkt oder ermöglicht wird - vorzugsweise eine mehrere axiale Bewegungen, Bewegungen quer zur Längsachse der einen oder mehreren Strahleinrichtungen (16), und/oder Drehungen um die Längsachse der einen oder mehreren Strahleinrichtungen (16).

13. Reinigungssystem (2) aufweisend eine Verfahreinrichtung (12), insbesondere einen Teleskoplader, aufweisend einen Teleskoparm (13), an dem als Anbaugerät die Reinigungsvorrichtung (3) nach einem der voranstehenden Ansprüche befestigt ist, sodass das Reinigungssystem (2) dazu ausgebildet ist, die Reinigungsvorrichtung (3) in Gebrauchslage von unten an die Kühlturmeinbauten (4) zu bewegen.

14. Verwendung der Reinigungsvorrichtung gemäß einem der Ansprüche 1 bis 12 oder des Reinigungssystems gemäß Anspruch 13 zur Reinigung von in ihrer Gebrauchslage in einem Kühlturm (1), insbesondere Naturzugkühlturm, eingebauten Kühlturmeinbauten (4).

15. Verfahren zur Reinigung von in ihrer Gebrauchslage befindlichen Kühlturmeinbauten (4), mit einer Reinigungsvorrichtung (3) zur Reinigung von Kühlturmeinbauten (4), wobei die Reinigungsvorrichtung (3) eine Trockeneisstrahlvorrichtung (14) aufweist, die eine oder mehrere Strahleinrichtungen (16) zur Abgabe von Strahlgut (14D) aufweist, die in die Kühlturmeinbauten (4) eingeschoben und/oder entlang der Kühlturmeinbauten (4) bewegt werden, und wobei die Reinigungsvorrichtung (3) eine Absaugung (17) aufweist, mit der durch das Strahlgut (14D) gelöstes Material aus den Kühlturmeinbauten (4) abgesaugt wird.

## Claims

1. A cleaning device (3) for cleaning cooling tower internals (4), the cleaning device (3) having a dry ice blasting apparatus (14), having one or more blasting devices (16) for emitting blasting material (14D) that are insertable into the cooling tower internals (4) and/or are movable along the cooling tower internals (4), the cleaning device (3) having a suction means (17), adapted to suck material that has been dissolved by the blasting material (14D) from the cooling tower internals (4).

2. The cleaning device according to claim 1, **characterized in that** the cleaning device (3) includes a positioning device (18) adapted to automatically move the one or more blasting devices (16) along and/or into the cooling tower internals (4) while blasting material (14D) is emitted by the blasting devices (16) so that the cooling tower internals (4) are successively exposed to blasting material (14D) for cleaning.

3. The cleaning device according to claim 1 or 2, **characterized in that** the cleaning device (3) includes a cleaning head (19), having the one or more blasting devices (16), preferably wherein cleaning rods (27) are arranged adjacent and/or parallel to the one or more blasting devices (16) for mechanical cleaning.

4. The cleaning device according to claim 3, **characterized in that** the cleaning head (19) includes a suction port (20) delimiting a suction opening (22) of the suction means (17) and adapted to be approached to or applied to the cooling tower internals (4) so that a negative pressure in the cooling tower internals (4) is generatable by the suction means (17) and/or material released from the cooling tower internals (4) is extractable from the cooling tower internals (4).

5. The cleaning device according to claims 2 to 4, **characterized in that** the cleaning head (19) includes the positioning device (18), wherein the positioning device (18) is adapted to move the one or more blasting devices (16) relative to the suction port (20), within the suction port (20), through the suction opening (22), out into the cooling tower internals (4), and/or through the suction opening (22) back into the suction port (20) to move so that different regions of the cooling tower internals (4) are reachable by blasting material that is emittable by the one or more blasting devices (16).

6. The cleaning device according to any one of the preceding claims, **characterized in that** the one or more blasting devices (16) are at least partially formed elongated or lance-like so that the one or more blasting devices (16) are insertable into the cooling tower internals (4) for cleaning.

7. The cleaning device according to claim 6, **characterized in that** the blasting devices (16) are movable by the positioning device (18) transversely to and/or along their longitudinal extent in order to reach different regions of the cooling tower internals (4).

8. The cleaning device according to one of the preceding claims, **characterized in that** the one or more blasting devices (16) are dimensionally stable and flexible and/or elastic at least in sections so that during insertion into the cooling tower internals (4) obstacles are by passable by deformation of the blasting devices (16).

9. The cleaning device according to one of the preceding claims, **characterized in that** the cleaning device (3) for cleaning located in their position of use cooling tower internals (4) of a cooling tower (1), in particular natural draught cooling tower, is formed, wherein the cleaning device (3) in the process chamber (5) of the cooling tower (1) is movable and/or telescopable to move the one or more blasting devices (16) to the cooling tower internals (4) and/or to different sections of the cooling tower internals (4).

10. The cleaning device according to one of the preceding claims, **characterized in that** the cleaning device (3) includes a sensor device (24) for detecting the position, location, and/or orientation of the cooling tower internals (4) and/or the one or more blasting devices (16).

11. The cleaning device according to one of claims 2 to 10, **characterized in that** the cleaning device (3) includes a control device (14) adapted to control the positioning device (18) such that the one or more blasting devices (16) are inserted into the cooling tower internals (4) in one first position, are then moved back out of the cooling tower internals (4), whereupon the blasting devices (16) are moved into a second position in a direction extending horizontally or transversely to the longitudinal extent with respect to the use position of the blasting devices (16) in order to be insertable, in this second position, into portion of the cooling tower internals (4) different from the first position.

12. The cleaning device according to one of claims 2 to 11, **characterized in that** the positioning device (18) includes a detection device (26) which is adapted and configured to detect an obstacle that counteracts an advance of one or more of the blasting devices (16) in the cooling tower internals (4), in particular to detect a force counteracting the insertion and, depending on this detection or force, cause a movement of the one or more blasting devices (16), preferably so that a deformation of the blasting device(s) (16) is caused or permitted by the obstacle and the movement in order to bypass the obstacle - preferably one or more axial movements, movements transverse to the longitudinal axis of the one or more blasting devices (16), and/or rotations about the longitudinal axis of the one or more blasting devices (16).

13. A cleaning system (2) comprising a traversing device (12), in particular a telescopic loader, including a telescopic arm (13) to which the cleaning device (3) according to one of the preceding claims is attachable as an attachment so that the cleaning system (2) is adapted to move the cleaning device (3) into the position of use against the cooling tower internals (4) from below.

14. A use of the cleaning device according to one of claims 1 to 12 or of the cleaning system according to claim 13 for cleaning cooling tower internals (4) built into a cooling tower (1), in particular natural draught cooling tower, in their position of use.

15. A method for cleaning cooling tower internals (4) in their position of use, with a cleaning device (3) for cleaning cooling tower internals (4), the cleaning device (3) having a dry ice blasting apparatus (14), having one or more blasting devices (16) for emitting blasting material (14D) that are inserted into the cooling tower internals (4) and/or are moved along the cooling tower internals (4), the cleaning device (3) having a suction means (17), used to suck material that has been dissolved by the blasting material (14D) from the cooling tower internals (4).

## Revendications

1. Dispositif de nettoyage (3) destiné au nettoyage des composants internes d'une tour de refroidissement (4), le dispositif de nettoyage (3) comprenant un dispositif de glace carbonique (14) comportant un ou plusieurs dispositifs de projection (16) destinés à l'émission de produit de projection (14D), lesdits dispositifs peuvent être insérés dans les composants internes de la tour de refroidissement (4) et/ou déplacés le long des composants internes de la tour de refroidissement (4), et le dispositif de nettoyage (3) comprenant un système d'aspiration (17) qui est conçu pour aspirer la matière détachée des composants internes de la tour de refroidissement (4) par le produit de projection (14D).

2. Dispositif de nettoyage selon la revendication 1, **caractérisé en ce que** le dispositif de nettoyage (3) comprend un dispositif de positionnement (18) qui est conçu pour déplacer automatiquement le ou les dispositifs de projection (16) le long des et/ou dans les composants internes de la tour de refroidissement (4), pendant que du produit de projection (14D) est émis par les dispositifs de projection (16), de telle sorte que les composants internes de la tour de refroidissement (4) sont successivement soumis à l'action du produit de projection (14D) pour le nettoyage.

3. Dispositif de nettoyage selon la revendication 1 ou 2, **caractérisé en ce que** le dispositifs de nettoyage (3) comprend une tête de nettoyage (19), laquelle présente le ou les dispositifs de projection (16), des barres de nettoyage (27) destinées au nettoyage mécanique étant de préférence disposées de manière adjacente et/ou parallèle au ou aux dispositifs de projection (16).

4. Dispositif de nettoyage selon la revendication 3, **caractérisé en ce que** la tête de nettoyage (19) comprend une tubulure d'aspiration (20) délimitant une ouverture d'aspiration (22) du système d'aspiration (17) et qui est conçue pour être approchée des ou appliquée sur les composants internes de la tour de refroidissement (4), de telle sorte qu'une dépression peut être générée par le système d'aspiration (17) dans les composants internes de la tour de refroidissement (4) et/ou de la matière détachée des composants internes de la tour de refroidissement (4) peut être aspirée hors des composants internes de la tour de refroidissement (4).

5. Dispositif de nettoyage selon les revendications 2 à 4, **caractérisé en ce que** la tête de nettoyage (19) présente le dispositif de positionnement (18), le dispositif de positionnement (18) étant conçu pour déplacer le ou les dispositifs de projection (16) par rapport à la tubulure d'aspiration (20), à l'intérieur de la tubulure d'aspiration (20), en le ou les faisant sortir de l'ouverture d'aspiration (22) en direction des composants de la tour de refroidissement (4) et/ou rentrer dans la tubulure d'aspiration (20) par l'ouverture d'aspiration (22), de telle sorte que différentes zones des composants de la tour de refroidissement (4) peuvent être atteintes par le produit de projection émis par le ou les dispositifs de projection (16).

6. Dispositif de nettoyage selon l'une des revendications précédentes, **caractérisé en ce que** le ou les dispositifs de projection (16) sont réalisés au moins partiellement de forme allongée ou en forme de lance, de telle sorte que le ou les dispositifs de projection (16) peuvent être insérés dans les composants internes de la tour de refroidissement (4) pour le nettoyage.

7. Dispositif de nettoyage selon la revendication 6, **caractérisé en ce que** les dispositifs de projection (16) peuvent être déplacés par le dispositif de positionnement (18) transversalement à et/ou le long de leur extension longitudinale, pour atteindre différentes zones des composants internes de la tour de refroidissement (4).

8. Dispositif de nettoyage selon l'une des revendications précédentes, **caractérisé en ce que** le ou les dispositifs de projection (16) sont indéformables et au moins partiellement flexibles et/ou élastiques, de telle sorte que lors de l'insertion dans les composants internes de la tour de refroidissement (4), des obstacles peuvent être contournés par la déformation des dispositifs de projection (16).

9. Dispositif de nettoyage selon l'une des revendications précédentes, **caractérisé en ce que** le dispositif de nettoyage (3) est conçu pour le nettoyage des composants internes d'une tour de refroidissement (4) se trouvant dans leur position d'utilisation dans la tour de refroidissement (1), singulièrement une tour de refroidissement à tirage naturel, le dispositif de nettoyage (3) pouvant être véhiculé et/ou déployé de manière télescopique dans l'espace process (5) de la tour de refroidissement (1) pour déplacer le ou les dispositifs de projection (16) jusqu'aux composants internes de la tour de refroidissement (4) et/ou jusqu'aux différentes zones des composants de la tour de refroidissement (4).

10. Dispositif de nettoyage selon l'une des revendications précédentes, **caractérisé en ce que** le dispositif de nettoyage (3) comprend un système de capteurs (24) destiné à détecter la position, l'état et/ou l'orientation des composants internes de la tour de refroidissement (4) et/ou du ou des dispositifs de projection (16).

11. Dispositif de nettoyage selon l'une des revendications 2 à 10, **caractérisé en ce que** le dispositif de nettoyage (3) comprend un dispositif de commande (14), qui est conçu pour commander le dispositif de positionnement (18) de telle manière que le ou les dispositifs de projection (16) sont insérés dans les composants internes de la tour de refroidissement (4) dans une première position, sont ensuite ressortis des composants internes de la tour de refroidissement (4), après quoi les dispositifs de projection (16) sont déplacés, au moyen de la position d'utilisation horizontalement ou transversalement par rapport à l'extension longitudinale des dispositifs de projection (16), dans une deuxième position différente de la première, pour, dans cette deuxième position, pouvoir être insérés dans une partie des composants internes de la tour de refroidissement (4) s'écartant de la première position.

12. Dispositif de nettoyage selon l'une des revendications 2 à 11, **caractérisé en ce que** le dispositif de positionnement (18) comprend un dispositif de détection (26), qui est conçu et configuré pour détecter un obstacle empêchant l'avance d'un ou de plusieurs dispositifs de projection (16) dans les composants internes de la tour de refroidissement (4), en particulier pour détecter une force empêchant l'insertion et entraîner, en fonction de cette détection ou force, un déplacement en tout cas du ou des dispositifs de projection (16), de préférence de telle sorte que, pour contourner l'obstacle, une déformation des dispositifs de projection (16) est causée ou permise par l'obstacle et le déplacement - de préférence un ou plusieurs déplacements axiaux, des déplacements transversaux par rapport à l'axe longitudinal du ou des dispositifs de projection (16) et/ou des rotations sur l'axe longitudinal du ou des dispositifs de projection (16).

13. Système de nettoyage (2) comprenant un dispositif de déplacement (12), en particulier un chargeur télescopique, comprenant un bras télescopique (13), sur lequel est fixé, comme élément rapporté, le dispositif de nettoyage (3) selon l'une des revendications précédentes, de telle sorte que le système de nettoyage (2) est conçu pour déplacer le dispositif de nettoyage (3) dans la position d'utilisation en partant du bas jusqu'aux composants internes de la tour de refroidissement (4).

14. Utilisation du dispositif de nettoyage selon l'une des revendications 1 à 12 ou du système de nettoyage selon la revendication 13 pour le nettoyage des composants internes d'une tour de refroidissement (4) installés dans leur position d'utilisation dans une tour de refroidissement (1), singulièrement une tour de refroidissement à tirage naturel.

15. Procédé de nettoyage des composants internes d'une tour de refroidissement (4) se trouvant dans leur position d'utilisation au moyen d'un dispositif de nettoyage (3) destiné au nettoyage des composants internes d'une tour de refroidissement (4), le dispositif de nettoyage (3) comprenant un dispositif de glace carbonique (14), qui comprend un ou plusieurs dispositifs de projection (16) destinés à l'émission de produit de projection (14D), qui sont insérés dans les composants internes de la tour de refroidissement (4) et/ou déplacés le long des composants internes de la tour de refroidissement (4), et le dispositif de nettoyage (3) comprenant un système d'aspiration (17) au moyen duquel de la matière détachée par le produit de projection (14D) est aspirée hors des composants internes de la tour de refroidissement (4).
